# EUROPEAN PATENT SPECIFICATION

(11) **EP 4 391 571 B1**
(45) Date of publication and mention of the grant of the patent: **17.06.2026**
(21) Application number: 23814878.7
(22) Date of filing: 05.05.2023
(51) Int. Cl.: H04N 23/60, H04N 23/611, H04N 5/262, H04N 5/77, H04N 9/82, H04N 23/63, H04N 23/69, H04R 3/00, H04N 5/91, H04N 23/62, H04N 23/667, H04N 23/67, H04M 1/72439, H04M 1/72403

(54) **VIDEO PROCESSING METHOD AND TERMINAL**
VIDEOVERARBEITUNGSVERFAHREN UND ENDGERÄT
PROCÉDÉ DE TRAITEMENT VIDÉO ET TERMINAL

(30) Priority: 30.05.2022 CN 202210603472; 30.07.2022 CN 202210912445
(43) Date of publication of application: 26.06.2024
(73) Proprietor: Honor Device Co., Ltd., Shenzhen, Guangdong 518040 (CN)
(72) Inventor: WANG, Jianxian, Shenzhen, Guangdong 518040 (CN)
(74) Representative: Gill Jennings & Every LLP
(86) International application number: PCT/CN2023/092237
(87) International publication number: WO 2023/231692

(56) References cited:
- EP-A1- 3 337 160
- WO-A1-2021/244368
- WO-A1-2022/057723
- CN-A- 102 378 081
- CN-A- 105 657 299
- CN-A- 110 072 070
- CN-A- 112 261 218
- CN-A- 112 423 197
- CN-A- 113 365 012
- CN-A- 113 365 013
- US-A1- 2011 050 963
- US-A1- 2012 062 732
- US-A1- 2022 417 433
- US-A1- 2023 185 518

## Description

### TECHNICAL FIELD

This application relates to the field of terminals, and in particular, to a video processing method and a terminal.

### BACKGROUND

With development of smart terminals, currently, terminals that support video recording, such as a mobile phone, can implement a shooting mode of automatic focus tracking. During video recording, the terminal may receive a main character selected by a user. Then, in a subsequent video recording process, the terminal can constantly perform focus tracking on the main character, to obtain a main-character video that includes an image of the foregoing selected main character. The main-character video may also be referred to as a focus-tracking video, a close-up video, or the like.

However, in the shooting mode of automatic focus tracking, the terminal obtains only the main-character video, and the main-character video and an original video cannot be simultaneously recorded in the recording process. The original video is composed of original images captured by a camera.

In the prior art, US2011/050963A1 relates to a method where a portion of an image captured by a wide-angle optical system which is to be zoomed in is selected, and an image in the area is captured by a telephoto optical system; EP3337160A1 relates to a method for providing an image; WO2021/244368A1 relates to a method and device for video playback; and CN105657299A relates to a method for processing shot data based on double cameras.

### SUMMARY

According to the present invention there is provide a video processing method as defined in claim 1, an electronic device as defined in claim 10, and a computer storage medium as defined in claim 11. Optional features are set out in the dependent claims. This application provides a video processing method and a terminal. In a video recording process, one path of obtained audio data is copied to obtain N paths of audio data, and the N paths of audio data may be simultaneously encoded to generate N videos in a recording process.

According to a first aspect, this application provides an audio processing method. The method is applied to a terminal. The terminal includes a camera. The method includes: displaying a recording interface, where the recording interface includes a first control, a first preview window, and a second preview window, and the first preview window is used to display an image captured by the camera; displaying a first image in the first preview window at a first moment, where the first image is captured by the camera at the first moment; when it is detected that a first object is in a first position of the first image, displaying, by the terminal, a second image in the second preview window, where the second image is generated based on the first image, and the second image includes the first object; displaying a third image in the first preview window at a second moment, where the third image is captured by the camera at the second moment; when it is detected that the first object is in a second position of the third image, displaying, by the terminal, a fourth image in the second preview window, where the fourth image is generated based on the third image, and the fourth image includes the first object; obtaining first audio data, where the first audio data includes a first audio signal and information about the first audio signal, and the first audio signal is an audio signal generated based on an audio signal collected at the first moment; and detecting a first operation for the first control, stopping video recording in response to the first operation, and saving a first video recorded based on an image displayed in the first preview window and a second video recorded based on an image displayed in the second preview window. The first video includes the first image and first target audio data, and the second video includes the second image and second target audio data. Both the first target audio data and the second target audio data are obtained based on the first audio data.

In the foregoing embodiment, the terminal may record two paths of videos in a recording process. One path of video may be an original video (a first video) related in this embodiment, and the other path of video may be a main-character video (a second video) related in this embodiment. The main-character video always includes a focus tracking object (that is, a first object). In a video recording process, a microphone of the terminal may collect an audio signal, and the terminal may perform real-time processing based on the collected audio signal to obtain a corresponding audio signal in the main-character video and a corresponding audio signal in the original video. It should be understood that because a video recording process is real-time, audio processing should also be real-time. In this way, it can be ensured that the terminal can obtain two paths of audio signals through one time of recording.

With reference to the first aspect, in some embodiments, before the displaying a recording interface, the method further includes: displaying the preview interface, where the preview interface includes a second control; detecting a second operation for the second control, so that a camera application enters a first mode in response to the second operation; when the first image is displayed in the first preview window, detecting a third operation for the first object; and displaying a second preview window in response to the third operation.

In the foregoing embodiment, the second control is a main-character mode control in this embodiment. The main-character mode control is an entry provided in this embodiment of this application for recording the two paths of videos, and is independent of another shooting mode for ease of management.

With reference to the first aspect, after the obtaining first audio data, before the stopping video recording, the method further includes: determining, by the terminal, a stream configuration quantity N; copying the first audio data to obtain N same paths of second audio data based on the stream configuration quantity N, where any path of second audio data includes the first audio signal and partial information of the first audio signal; and obtaining the first target audio data based on one path of second audio data, and obtaining the second target audio data based on another path of second audio data.

In the foregoing embodiment, the first audio data herein includes an audio signal related to generation of the main-character video and the original video. However, there is only one path of first audio data (related to hardware configuration). In this case, the first audio data is not encoded (when a video is generated, audio needs to be encoded to obtain an audio stream, and the audio stream is mixed with an image stream to obtain the video). To obtain two paths of videos in real time, it should be ensured herein that an audio signal corresponding to the main-character video and an audio signal corresponding to the original video can be simultaneously encoded. Therefore, one path of first audio data needs to be copied to obtain two paths of second audio data, and then the two paths of second audio data are concurrently encoded to obtain an audio stream corresponding to the main-character video and an audio stream related to the original video.

With reference to the first aspect, in some embodiments, the obtaining the first target audio data based on one path of second audio data, and obtaining the second target audio data based on another path of second audio data specifically includes: encoding, by the terminal, one path of second audio data and another path of second audio data to obtain two paths of encoded audio data. One path of encoded audio data is used as the first target audio data, and the other path of encoded audio data is used as the second target audio data.

In the foregoing embodiment, the first audio data herein includes the audio signal related to generation of the main-character video and the original video. However, there is only one path of first audio data (related to hardware configuration). In this case, the first audio data is not encoded (when the video is generated, audio needs to be encoded to obtain the audio stream, and the audio stream is mixed with the image stream to obtain the video). To obtain the two paths of videos in real time, it should be ensured herein that the audio signal corresponding to the main-character video and the audio signal corresponding to the original video can be simultaneously encoded. Therefore, one path of first audio data needs to be copied to obtain two paths of second audio data, and then the two paths of second audio data are concurrently encoded to obtain the audio stream corresponding to the main-character video and the audio stream related to the original video.

With reference to the first aspect, in some embodiments, the determining, by the terminal, a stream configuration quantity N specifically includes: detecting, by the terminal, the second operation for the second control, and determining, by the terminal, the stream configuration quantity N in response to the operation; after the recording interface is displayed, detecting an operation for the first object; and updating, by the terminal, the stream configuration quantity N in response to the operation for the first object.

In the foregoing embodiment, the second control is the main-character mode control. The terminal can determine N when detecting an operation for the main-character mode control. Subsequently, the terminal may further update N. An occasion for updating N is that an operation for determining a focus tracking object (that is, an operation for the first object) is detected. In this way, it is ensured that changed N can be obtained when N is changed.

With reference to the first aspect, in some embodiments, the determining, by the terminal, a stream configuration quantity N specifically includes: detecting, by the terminal, the second operation for the second control, and determining, by the terminal, the stream configuration quantity N in response to the operation; after the recording interface is displayed, detecting an operation for stopping recording the second video; and updating, by the terminal, the stream configuration quantity N in response to the operation for stopping recording the second video.

In the foregoing embodiment, the second control is the main-character mode control. The terminal can determine N when detecting an operation for the main-character mode control. Subsequently, the terminal may further update N. An occasion for updating N is that an operation for stopping recording the main-character video (that is, the second object) is detected. In this way, it is ensured that changed N can be obtained when N is changed.

With reference to the first aspect, in some embodiments, the terminal includes a first audio encoding module and a second audio encoding module, and the encoding, by the terminal, one path of second audio data and another path of second audio data specifically includes: encoding, by the first audio encoding module, the path of second audio data, and encoding, by the second audio encoding module, the another path of second audio data.

In the foregoing embodiment, the first audio data herein includes the audio signal related to generation of the main-character video and the original video. However, there is only one path of first audio data (related to hardware configuration). In this case, the first audio data is not encoded (when the video is generated, audio needs to be encoded to obtain the audio stream, and the audio stream is mixed with the image stream to obtain the video). To obtain the two paths of videos in real time, it should be ensured herein that the audio signal corresponding to the main-character video and the audio signal corresponding to the original video can be simultaneously encoded. Therefore, one path of first audio data needs to be copied to obtain two paths of second audio data, and then the two paths of second audio data are concurrently encoded to obtain the audio stream corresponding to the main-character video and the audio stream related to the original video.

With reference to the first aspect, in some embodiments, the first audio data includes the first audio signal and a timestamp, a data length, a sampling rate, and a data format of the first audio signal.

With reference to the first aspect, in some embodiments, the second audio data includes the first audio signal and a timestamp and a data length of the first audio signal.

According to a second aspect, this application provides an electronic device. The electronic device includes one or more processors and a memory. The memory is coupled to the one or more processors. The memory is configured to store computer program code. The computer program code includes computer instructions. The one or more processors invoke the computer instructions, so that the electronic device performs the following operations:

In the foregoing embodiment, the terminal may record two paths of videos in a recording process. One path of video may be an original video (a first video) related in this embodiment, and the other path of video may be a main-character video (a second video) related in this embodiment. The main-character video always includes a focus tracking object (that is, a first object). In a video recording process, a microphone of the terminal may collect an audio signal, and the terminal may perform real-time processing based on the collected audio signal to obtain a corresponding audio signal in the main-character video and a corresponding audio signal in the original video. It should be understood that because a video recording process is real-time, audio processing should also be real-time. In this way, it can be ensured that the terminal can obtain two paths of audio signals through one time of recording. It should be understood that first audio data herein includes an audio signal related to generation of the main-character video and the original video. However, there is only one path of first audio data (related to hardware configuration). In this case, the first audio data is not encoded (when a video is generated, audio needs to be encoded to obtain an audio stream, and the audio stream is mixed with an image stream to obtain the video). To obtain the two paths of videos in real time, it should be ensured herein that the audio signal corresponding to the main-character video and the audio signal corresponding to the original video can be simultaneously encoded. Therefore, one path of first audio data needs to be copied to obtain two paths of second audio data, and then the two paths of second audio data are concurrently encoded to obtain the audio stream corresponding to the main-character video and the audio stream related to the original video.

According to a third aspect, this application provides a chip system. The chip system is used to an electronic device. The chip system includes one or more processors. The processor is configured to invoke computer instructions, so that the electronic device executes the method described in the first aspect or any one of the implementations of the first aspect.

In the foregoing embodiment, a terminal may record two paths of videos in a recording process. One path of video may be an original video (a first video) related in this embodiment, and the other path of video may be a main-character video (a second video) related in this embodiment. The main-character video always includes a focus tracking object (that is, a first object). In a video recording process, a microphone of the terminal may collect an audio signal, and the terminal may perform real-time processing based on the collected audio signal to obtain a corresponding audio signal in the main-character video and a corresponding audio signal in the original video. It should be understood that because a video recording process is real-time, audio processing should also be real-time. In this way, it can be ensured that the terminal can obtain two paths of audio signals through one time of recording. It should be understood that first audio data herein includes an audio signal related to generation of the main-character video and the original video. However, there is only one path of first audio data (related to hardware configuration). In this case, the first audio data is not encoded (when a video is generated, audio needs to be encoded to obtain an audio stream, and the audio stream is mixed with an image stream to obtain the video). To obtain the two paths of videos in real time, it should be ensured herein that the audio signal corresponding to the main-character video and the audio signal corresponding to the original video can be simultaneously encoded. Therefore, one path of first audio data needs to be copied to obtain two paths of second audio data, and then the two paths of second audio data are concurrently encoded to obtain an audio stream corresponding to the main-character video and an audio stream related to the original video.

According to a fourth aspect, this application provides a computer program product including instructions. When the computer program product is run on an electronic device, the electronic device is enabled to perform the method described in the first aspect or any one of the implementations of the first aspect.

In the foregoing embodiment, a terminal may record two paths of videos in a recording process. One path of video may be an original video (a first video) related in this embodiment, and the other path of video may be a main-character video (a second video) related in this embodiment. The main-character video always includes a focus tracking object (that is, a first object). In a video recording process, a microphone of the terminal may collect an audio signal, and the terminal may perform real-time processing based on the collected audio signal to obtain a corresponding audio signal in the main-character video and a corresponding audio signal in the original video. It should be understood that because a video recording process is real-time, audio processing should also be real-time. In this way, it can be ensured that the terminal can obtain two paths of audio signals through one time of recording. It should be understood that first audio data herein includes an audio signal related to generation of the main-character video and the original video. However, there is only one path of first audio data (related to hardware configuration). In this case, the first audio data is not encoded (when a video is generated, audio needs to be encoded to obtain an audio stream, and the audio stream is mixed with an image stream to obtain the video). To obtain the two paths of videos in real time, it should be ensured herein that the audio signal corresponding to the main-character video and the audio signal corresponding to the original video can be simultaneously encoded. Therefore, one path of first audio data needs to be copied to obtain two paths of second audio data, and then the two paths of second audio data are concurrently encoded to obtain an audio stream corresponding to the main-character video and an audio stream related to the original video.

According to a fifth aspect, this application provides a computer-readable storage medium, including instructions. When the instructions are run on an electronic device, the electronic device performs the method described in the first aspect or any one of the implementations of the first aspect.

In the foregoing embodiment, a terminal may record two paths of videos in a recording process. One path of video may be an original video (a first video) related in this embodiment, and the other path of video may be a main-character video (a second video) related in this embodiment. The main-character video always includes a focus tracking object (that is, a first object). In a video recording process, a microphone of the terminal may collect an audio signal, and the terminal may perform real-time processing based on the collected audio signal to obtain a corresponding audio signal in the main-character video and a corresponding audio signal in the original video. It should be understood that because a video recording process is real-time, audio processing should also be real-time. In this way, it can be ensured that the terminal can obtain two paths of audio signals through one time of recording. It should be understood that first audio data herein includes an audio signal related to generation of the main-character video and the original video. However, there is only one path of first audio data (related to hardware configuration). In this case, the first audio data is not encoded (when a video is generated, audio needs to be encoded to obtain an audio stream, and the audio stream is mixed with an image stream to obtain the video). To obtain the two paths of videos in real time, it should be ensured herein that the audio signal corresponding to the main-character video and the audio signal corresponding to the original video can be simultaneously encoded. Therefore, one path of first audio data needs to be copied to obtain two paths of second audio data, and then the two paths of second audio data are concurrently encoded to obtain an audio stream corresponding to the main-character video and an audio stream related to the original video.

### BRIEF DESCRIPTION OF DRAWINGS

FIG. 1A, FIG. 1B, FIG. 1C, and FIG. 1D are schematic diagrams of a supplementary description of a main-character mode according to an embodiment of this application;
FIG. 2A, FIG. 2B, FIG. 2C, and FIG. 2D are schematic diagrams of a manner of entering a main-character mode according to an embodiment of this application;
FIG. 3 is a schematic diagram of an interface of selecting a focus tracking object in a preview mode of a main-character mode;
FIG. 4A and FIG. 4B are schematic diagrams of scenarios in a recording mode of a main-character mode;
FIG. 5A is a schematic diagram of a scenario of exiting a main-character mode according to an embodiment of this application;
FIG. 5B is a schematic diagram of saving and viewing a recorded video in a main-character mode;
FIG. 6 is a flowchart of an example of recording an original video and a main-character video according to an embodiment of this application;
FIG. 7A and FIG. 7B are a schematic block diagram of a software structure of a terminal that copies one path of audio data to obtain N paths of audio data and performs concurrent encoding;
FIG. 8A and FIG. 8B are a schematic flowchart of interaction between modules when a terminal copies one path of audio data to obtain N paths of audio data and performs concurrent encoding;
FIG. 9A and FIG. 9B are a schematic flowchart of interaction between modules when a terminal copies one path of audio data to obtain N paths of audio data and performs concurrent encoding when generating an original video and a main-character video;
FIG. 10A to FIG. 10D are diagrams of examples in which a terminal obtains first audio data based on audio signals collected by M microphones;
FIG. 11 is a schematic diagram of splitting two paths of second audio data to obtain audio data corresponding to a main-character video and splitting the other path of second audio data to obtain audio data corresponding to an original video;
FIG. 12 is a schematic flowchart in which a terminal copies one path of audio data to obtain N paths of audio data and performs concurrent encoding to generate N videos;
FIG. 13 is a schematic diagram in which a terminal copies first audio data to obtain two paths of second audio data; and
FIG. 14 is a schematic diagram of a structure of a terminal according to an embodiment of this application.

### DESCRIPTION OF EMBODIMENTS

Terms used in the following embodiments of this application are merely for the purpose of describing specific embodiments, but are not intended to limit this application. As used in this specification and the claims of this application, singular expressions "one", "a", "the", "foregoing", "this", and "this one" are intended to include plural expressions, unless otherwise clearly specified in the context. It should be further understood that the term "and/or" used in this application indicates and includes any or all possible combinations of one or more listed items.

In the following, terms "first" and "second" are merely used for description purposes, and cannot be understood as indicating or implying relative importance or implicitly indicating a quantity of indicated technical features. Therefore, a feature defined to be "first" or "second" may explicitly or implicitly include one or more features. In the description of embodiments of this application, unless otherwise stated, "a plurality of" means two or more.

In a solution, when a terminal records a video in a shooting mode of automatic focus tracking, after the terminal determines to record a main character, the terminal may finally obtain a video after ending recording. In this case, the video is a main-character video that includes an image of the foregoing main character. Image content around the main character in the main-character video is incomplete in most cases. In this way, other image content other than the main character in a recording process is ignored in the final recorded video (the main-character video). After one time of recording is completed, although the main-character video is obtained, an environment in which the main character is located (a state and an action of an object around the main character) during recording cannot be obtained.

An embodiment of this application provides a video processing method. The method may be applied to a terminal that can record a video, for example, a mobile phone or a tablet computer.

In embodiments of this application, after determining to record the main character, the terminal may simultaneously generate two videos. One video is a main-character video, and the other is an original video. The original video includes original images captured by a camera. An image included in the main-character video is obtained through recognizing the main character in the image and obtaining, through cutting, a partial image including the main character based on the original image. The image included in the main-character video may be referred to as a main-character image. In a video recording process, the terminal may simultaneously display the foregoing original video and the main-character video for the user to preview.

In this way, after determining the main character, the terminal may record the main-character video that includes the image including the main character, and may also obtain the original video that includes the original images captured by the original camera.

The following specifically describes an example user interface in which a terminal implements a video processing method provided in an embodiment of this application.

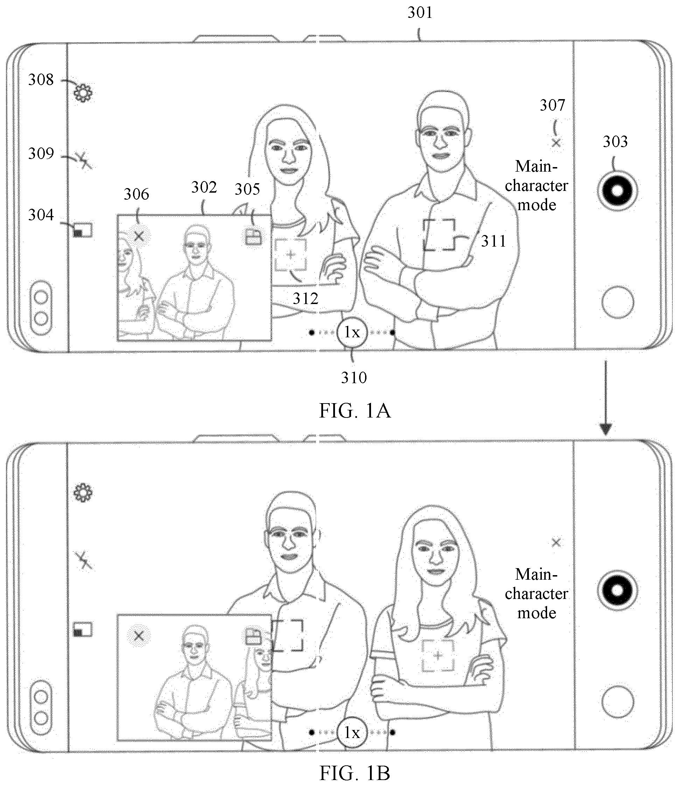

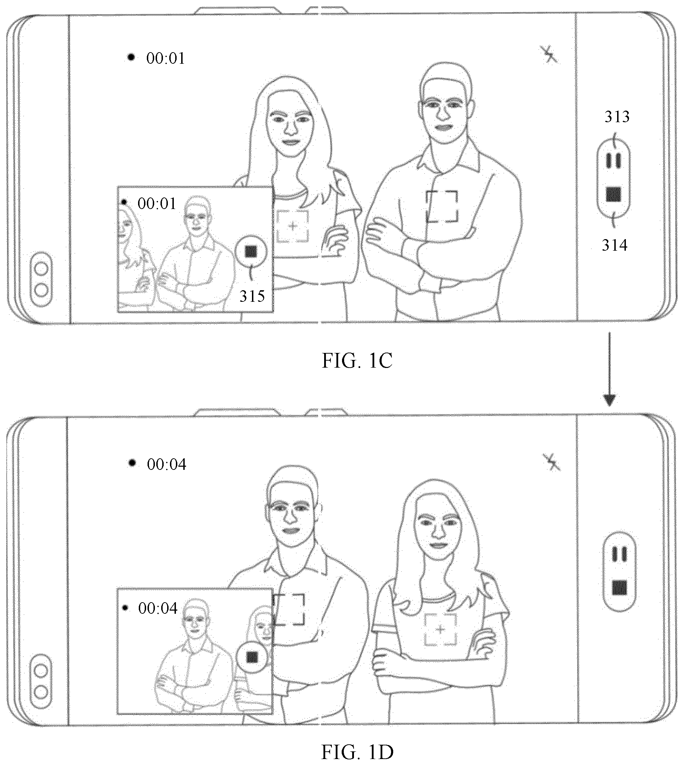

An embodiment of this application provides a video processing method. In this method, a terminal may provide a video recording function in a main-character mode. An original video and a main-character video can be generated in one recording process. With reference to FIG. 1A, FIG. 1B, FIG. 1C, and FIG. 1D, the following provides a supplementary description of the main-character mode in this embodiment of this application.

The following first describes definitions of nouns in embodiments of this application.

The main-character mode may be understood as a mode in which a terminal may additionally generate a focus tracking video when recording a video. A portrait in the focus tracking video may be understood as a "main character" to which a user pays attention. A manner of generating a video corresponding to the "main character" may be: cutting a normally recorded video of the terminal to obtain video content corresponding to the "main character". It may be understood that the main-character mode of the terminal may provide a preview mode and a recording mode. In the preview mode, a preview interface may be displayed on a display of the terminal. In the recording mode, a recording interface may be displayed on the display of the terminal.

It should be noted that interfaces displayed by the terminal in the preview mode (before recording) and the recording mode (during recording) may be both referred to as preview interfaces. An image displayed on the preview interface in the preview mode (before recording) is not used to generate a video and save the video. An image displayed on the preview interface in the recording mode (during recording) may be used to generate a video and save the video. For ease of distinguishing, in the following, a preview interface in the preview mode (before recording) is referred to as a preview interface, and a preview interface in the recording mode (during recording) is referred to as a recording interface.

The preview interface may include a large window and a small window. The large window may be a window whose specification is equal to or slightly less than a specification of the display. An image obtained by the camera may be displayed in the large window. The image displayed in the large window in the preview mode may be defined as a preview image in the large window. The small window may be a window whose specification is less than the specification of the large window. An image of a focus tracking object (the foregoing main character) selected by the user may be displayed in the small window. The terminal may select the focus tracking object based on a tracking identifier associated with the focus tracking object. The image displayed in the small window in the preview mode may be defined as a preview image in the small window. It may be understood that, in the preview mode, the terminal may display, based on the large window, an image obtained by the camera, and display the image of the focus tracking object in the small window. However, the terminal may not generate a video, or may not save content displayed in the large window and the small window.

The recording interface may include a large window and a small window. The large window may be a window whose specification is equal to or slightly less than the specification of the display. An image obtained by the camera may be displayed in the large window. The image displayed in the large window in the recording mode may be defined as a recorded image in the large window. The small window may a window whose specification is less than the specification of the large window. An image of a focus tracking object (the foregoing main character) selected by the user may be displayed in the small window. The image displayed in the small window in the recording mode may be defined as a recoded image in the small window. It may be understood that, in the recording mode, the terminal may not only display the recorded image of the large window and the recorded image of the small window, but also may generate a recorded video corresponding to the large window (also referred to as an original video) and a recorded video corresponding to the small window (also referred to as a main-character video) after enabling the recording mode. In addition, the original video may be saved after large-window recording is ended, and the main-character video may be saved after small-window recording is ended. Names of the preview mode and the recording mode are not limited in this embodiment of this application.

For the preview interface and the recording interface, the image that is obtained by the camera and that is displayed in the large window may also be referred to as an original image, and the image that is of the focus tracking object selected by the user and that is displayed in the small window may also be referred to as a main-character image.

It should be noted that the preview interface described in this embodiment of this application may be understood as that a camera application on the terminal is in the preview mode of the main-character mode, and the recording interface may be understood as that the camera application on the terminal is in the recording mode of the main-character mode. Details are not described below again.

For example, functions of the main-character mode may be set in the camera application (which may also be referred to as a camera or a camera APP). For example, in a preview scenario, the preview interface of the main-character mode of the terminal may be shown in FIG. 1A. The preview interface may include a large window 301, a small window 302, and a plurality of controls. The plurality of controls may include a recording start control 303, a first landscape-portrait switching control 304, a second landscape-portrait switching control 305, a small-window closing control 306, and a main-character mode exit control 307. Optionally, the control may further include a recording setting control 308, a flash control 309, a zoom control 310, and the like.

The terminal may display a preview image (the foregoing original image) in the large window 301. The preview image may include a plurality of persons. When the terminal detects that there are persons in the preview image in the large window, tracking identifiers associated with the persons may be displayed in the preview image. For example, the tracking identifiers may be tracking boxes (for example, a tracking box 311 and a tracking box 312) displayed at corresponding positions of the persons. For example, a male person in the preview image may correspond to the tracking box 311, and a female person may correspond to the tracking box 312. The tracking box may prompt the user that a corresponding person can be set to a focus tracking object or may be switched to a focus tracking object (the foregoing main character). When the terminal recognizes N persons, M (M≤N) tracking boxes may be displayed in the large window. The terminal may set any person as the focus tracking object to generate video content of the focus tracking object. This embodiment of this application imposes no limitation on the "main character". The "main character" may be a living body such as a person or an animal, or may be a non-living body such as a vehicle. It may be understood that any object that can be recognized based on an algorithm model may be used as the "main character" in this embodiment of this application. In this embodiment of this application, the "main character" may be defined as the focus tracking object, and the focus tracking object may also be referred to as a main-character object, a tracking target, a tracking object, a focus tracking target, and the like. In this embodiment of this application, that a person is used as the "main character" is used as an example for description. However, a concept of the "main character" is not limited in this embodiment of this application.

In some embodiments, the tracking identifier may be alternatively another form of tracking identifier. For example, when the terminal recognizes a plurality of focus-trackable objects, tracking identifiers corresponding to the focus-trackable objects are displayed near the focus-trackable objects in the large window. The tracking identifier may be a number, a letter, a graph, or the like. The user taps the tracking identifier. The terminal selects a focus tracking object in response to the tapping operation. For another example, the plurality of focus-trackable objects in the large window are marked with digits, graphs, user images, or other tracking identifiers. The terminal may arrange the plurality of tracking identifiers at edges or in other positions of a display region of the large window. The user may select the focus tracking object through tapping the tracking identifier in the large window. In this embodiment of this application, the tracking box is used as an example to describe a recording method. However, a form of the tracking identifier is not limited in this embodiment of this application.

It should be noted that, when recognizing two or more persons, the terminal in this embodiment of this application may mark tracking boxes corresponding to the persons; or when recognizing a single person, the terminal may mark a tracking box corresponding to the single person or may not mark a tracking box. This is not limited herein.

Optionally, the N persons displayed in the large window may be focus-trackable objects, the selected "main character" is the focus tracking object, and a person that is not selected as the "main character" is another object. Different patterns may be displayed for the tracking box (for example, the tracking box 311) of the focus tracking object and a tracking box (for example, the tracking box 312) of another object. In this way, it is convenient for the user to distinguish between tracked persons.

In some embodiments, a shape, a color, a size, and a position of the tracking box are adjustable. For example, a pattern of the tracking box 311 of the focus tracking object may be a dashed-line box. A pattern of the tracking box 312 of the another object may be a combination of a dashed-line box and "+". In addition to different shapes of tracking boxes, colors of tracking boxes may be further set in this embodiment of this application, for example, a color of the tracking box 311 is different from a color of the tracking box 312. In this way, the focus tracking object and another object can be intuitively distinguished. It may be understood that the tracking box may be alternatively in another display form, provided that the tracking box meets functions that can be triggered by the user to track a focus-trackable object.

The tracking box may be marked in any position of the focus-trackable object. This is not specifically limited in this embodiment of this application. In a possible implementation, to avoid visual interference to preview of the focus-trackable object in the large window, a tracking box may avoid a face of the focus-trackable object. For example, the tracking box may be marked in a relatively centered position of a body of the focus-trackable object. The terminal can perform facial recognition and body recognition. When the terminal recognizes a face, the terminal may display a tracking box. The terminal may determine a display position of the tracking box through facial recognition and body recognition. The tracking box is displayed in a central position of a body.

It should be noted that, in some embodiments, the following scenario may appear: The preview image in the large window includes N persons. There are M (M≤N) focus-trackable objects marked with tracking boxes and N-M persons that are not recognized by the terminal. During actual recording, the terminal may display the tracking box based on a face technology. When the terminal cannot capture a face of a person (for example, a back of the person), the terminal does not mark the tracking box for the person. A method for implementing display of a tracking box is not limited in this embodiment of this application.

In a preview scenario, the preview image in the focus tracking object is displayed in the small window 302. The preview image in the small window may be a part of the preview image in the large window. In a possible implementation, the preview image in the small window is obtained through cutting the preview image in the large window according to a specific proportion based on the focus tracking object. The terminal may cut the image in the large window based on an algorithm. The small window obtains the part of the image in the large window. In some embodiments, when a cutting calculation time is long, an image obtained after several frames of images displayed in real time in the large window are cut may be displayed in real time in the small window. The image displayed in the small window is not specifically limited in this embodiment of this application.

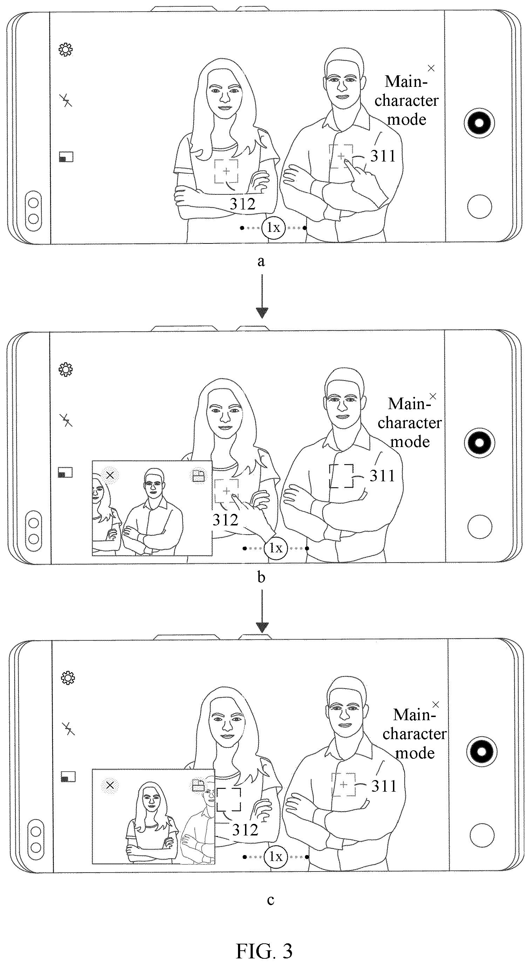

When the focus tracking object is switched, a person in the preview image displayed in the small window 302 is correspondingly switched. For example, if the focus tracking object is switched from a male person to a female person, the preview image displayed in the small window 302 also changes accordingly. A scenario in which the terminal selects or switches the focus tracking object is described in detail below with reference to FIG. 3. Details are not described herein again.

In some embodiments, a specification, a position, a landscape-portrait display manner, and the like of the small window are adjustable, and the user can adjust a pattern of the small window according to a recording habit.

The preview interface further includes a plurality of controls. The following describes functions of the controls.

The recording start control 303 is used to control the terminal to start large-window recording or start large-window recording and small-window recording.

The first landscape-portrait switching control 304 may be displayed in the large window, and is used to adjust landscape-mode display and portrait-mode display of the small window.

The second landscape-portrait switching control 305 may be displayed in the small window, and is also used to adjust landscape-mode display and portrait-mode display of the small window.

The small-window closing control 306 is used to close the small window on the terminal.

The main-character mode exit control 307 is used to exit the main-character mode on the terminal and enter a normal recording mode.

It may be understood that the preview interface may include the large window and the small window in the preview scenario. The preview image in the large window includes a focus-trackable object. When the terminal selects the focus tracking object, the focus tracking object may be centrally displayed in the preview image in the small window. In some scenarios, the focus tracking object may be in a moving state. When the focus tracking object moves but does not leave a lens, the focus tracking object may be continuously centrally displayed in the preview image in the small window. For example, the trackable object in the preview interface includes a male person and a female person. In response to a tapping operation performed by the user on a tracking box of the male person, the terminal selects the male person as the focus tracking object, and displays an interface shown in FIG. 1A. In the interface in FIG. 1A, the male person is centrally displayed in the preview image in the small window, and the male person is located on a right side of the female person. When the male person moves, the terminal may continuously perform focus tracking on the male person, and display the male person centrally in the small window. When the male person walks to a left side of the female person, an interface of the terminal may be shown in FIG. 1B. In the interface in FIG. 1B, the male person is still centrally displayed in the preview image in the small window, and the male person is located on the left side of the female person.

For example, in the recording scenario, the recording interface of the main-character mode of the terminal may be shown in FIG. 1C. The recording interface may include a large window 301, a small window 302, a plurality of controls, and a recording time. The controls may include a recording pause control 313, a recording end control 314, and a small-window recording end control 315.

In the recording scenario, a recorded image of the focus tracking object is displayed in the small window 302. This is different from the case in the preview scenario. In a recording process, the terminal may additionally generate a video recorded in the small window based on a video recorded in the large window. The recorded image in the small window may be a part of a recorded image in the large window. This is similar to the case in the preview process. In a possible implementation, the recorded image in the small window is obtained through cutting the recorded image in the large window according to a specific proportion based on the focus tracking object. The two paths of videos are separately saved in the terminal. In this way, the entire video does not need to be manually edited subsequently to obtain the video corresponding to the focus tracking object. This is easily and conveniently operatable, thereby improving user experience.

The recording interface may include the plurality of controls. The following describes functions of the controls.

The recording pause control 313 is used to pause video recording. Large-window recording and small-window recording can be simultaneously paused. When the recording interface does not include the small window, the recording pause control 313 may pause only large-window recording.

The recording end control 314 is used to end video recording. Large-window recording and small-window recording can be simultaneously ended. When the recording interface does not include the small window, the recording end control 314 may end only large-window recording.

The small-window recording end control 315 is used to end video recording in the small window. The terminal may end small-window recording by using the small-window recording end control 315, without affecting large-window recording.

The recording time is used to mark recording duration of a current video. Recording duration of the large window may be the same as or different from that of the small window.

It may be understood that the recording interface may include the large window and the small window in the recording scenario. The recorded image in the large window includes the focus-trackable object. When the terminal selects the focus tracking object, the focus tracking object may be centrally displayed in the recorded image in the small window. In some scenarios, the focus tracking object may be in a moving state. When the focus tracking object moves but does not leave a lens, a focus moves with the movement of the focus tracking object, and the focus tracking object may be continuously centrally displayed in the recorded image in the small window. For example, the trackable object in the recording interface includes a male person and a female person. In response to a tapping operation performed by the user on a tracking box of the male person, the terminal selects the male person as the focus tracking object, and displays an interface shown in FIG. 1C. In the interface in FIG. 1C, the male person is centrally displayed in the recorded image in the small window, and the male person is located on a right side of the female person. In this case, a focus is located in a facial region of the male person in a right-side part of the image. When the male person moves, the terminal may continuously perform focus tracking and recording on the male person, and display the male person centrally in the small window. When the male person walks to a left side of the female person, an interface of the terminal may be shown in FIG. 1D. In the interface in FIG. 1D, the male person is centrally displayed in the recorded image in the small window, and the male person is located on a left side of the female person. In this case, a focus is located in a facial region of the male person in a left-side part of the image.

In this embodiment of this application, the shooting mode in which the focus tracking video is additionally generated based on the focus tracking object is defined as the main-character mode. The shooting mode may also be referred to as the focus tracking mode. This is not limited in this embodiment of this application.

When recording is performed in the main-character mode, there are a plurality of manners of entering the main-character mode.

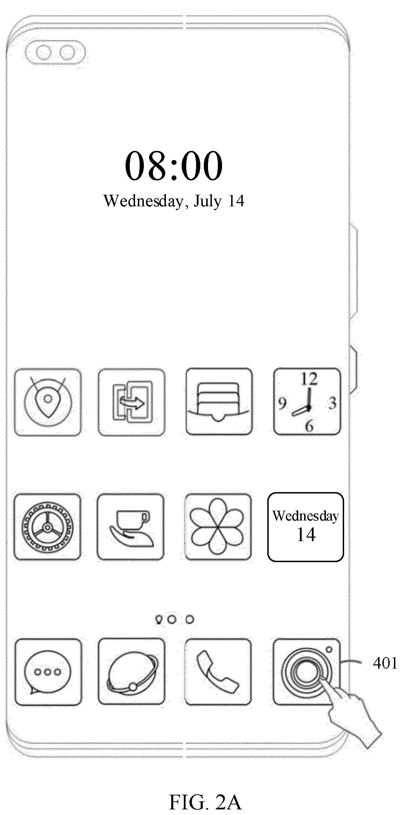

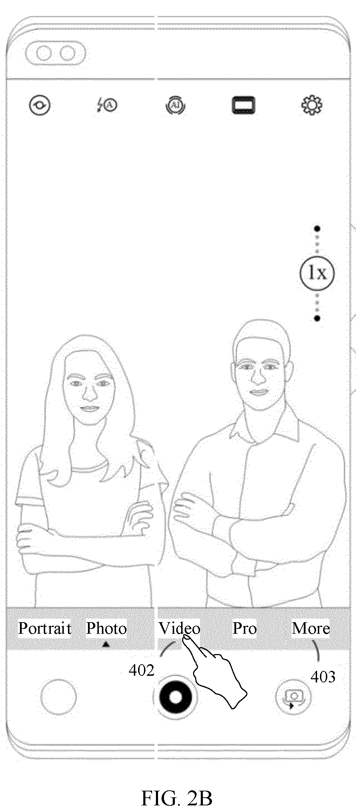

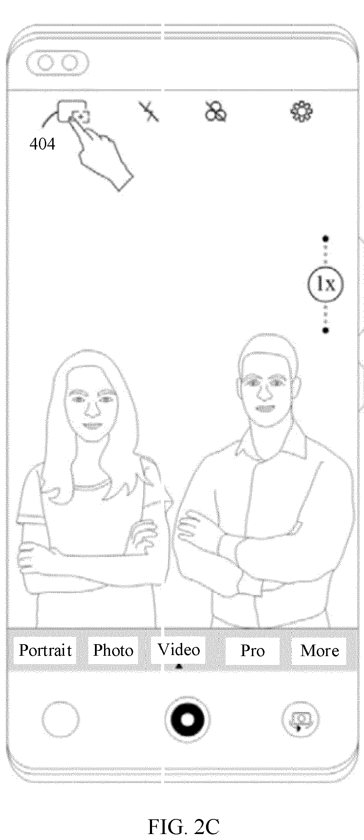

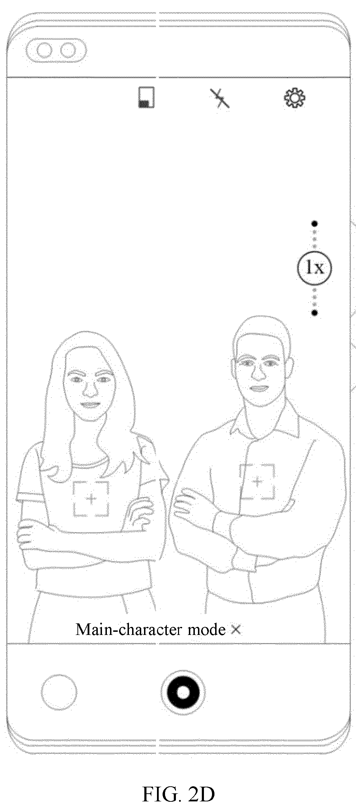

For example, a manner of entering the main-character mode in this embodiment of this application is described in detail with reference to FIG. 2A, FIG. 2B, FIG. 2C, and FIG. 2D.

In a possible implementation, the terminal displays a home screen shown in FIG. 2A. When the terminal detects an operation performed by the user to open a camera application 401, the terminal may display a photographing preview interface shown in FIG. 2B. The photographing preview interface may include a preview image and a shooting mode selecting control. A scene captured by a camera of the terminal may be displayed in real time in the preview image. The shooting mode selecting control includes but is not limited to a "Portrait" control, a "Photo" control, a "Video" control 402, a "Pro" control, and a "More" control 403.

When the terminal detects an operation of tapping the "Video" control 402 by the user, the terminal switches from the photographing preview interface to a recording preview interface shown in FIG. 2C. The recording preview interface may include but is not limited to: a main-character mode control 404 that is used to receive a trigger to enter the main-character mode, a recording setting control that is used to receive a trigger to enter settings, a filter control that is used to receive a trigger to enable filter effect, and a flash control that is used to set flash effect.

The terminal may enter the main-character mode based on the main-character mode control 404 on the recording preview interface. For example, the user taps the main-character mode control 404 on the interface, and the terminal responds to the tapping operation to display a preview interface shown in FIG. 2D. On the preview interface, there may be a plurality of photographed objects in a large window. The terminal may recognize the plurality of photographed objects based on image content of the large window. The plurality of photographed objects may be used as focus-trackable objects. The preview interface of the terminal may mark a tracking box for each focus-trackable object.

In another possible implementation, the terminal may not enter the main-character mode by using the "Video" control, but use the main-character mode as a new mode. For example, the terminal may display the main-character mode by using the "More" control 403, and then select the main-character mode and enter the main-character mode. For other descriptions after entrance to the main-character mode, refer to the foregoing content. Details are not described herein again.

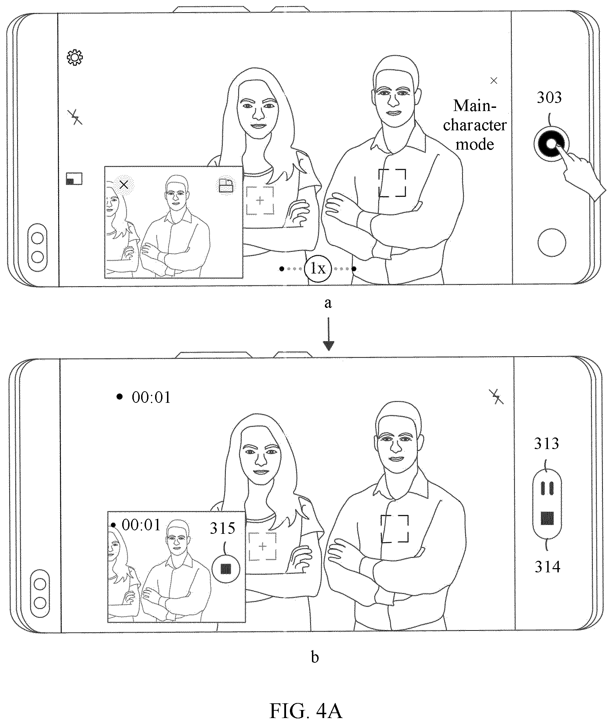

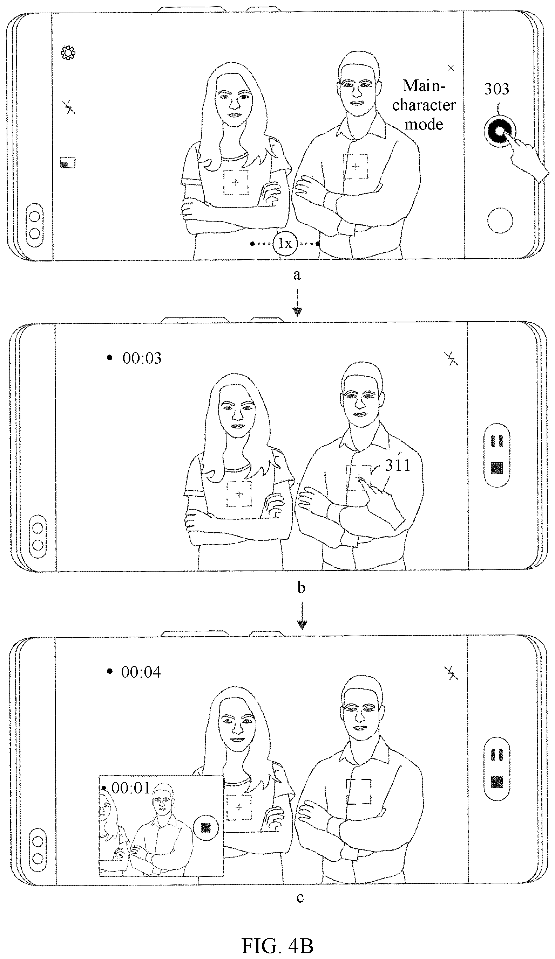

With reference to FIG. 3, an embodiment of this application describes in detail a scenario in a preview mode of a main-character mode. With reference to FIG. 4A and FIG. 4B, an embodiment of this application describes in detail a scenario in a recording mode of a main-character mode.

First, a scenario of the preview mode is described.

For example, FIG. 3 is a schematic diagram of an interface of selecting a focus tracking object in a preview mode of a main-character mode.

As shown in FIG. 3, the terminal enters the preview mode of the main-character mode. As shown in a in FIG. 3, the terminal may display a preview interface of the main-character mode. The preview interface includes a plurality of focus-trackable objects. Each focus-trackable object may be correspondingly marked with a respective tracking box (for example, the tracking box 311 corresponding to the male person and the tracking box 312 corresponding to the female person).

The terminal may determine, based on an operation (for example, a tapping operation) performed by the user on the tracking box, a focus tracking object selected by the user. For example, the user hopes to preview a focus tracking image of the male person in a small window of the terminal, and may tap the tracking box 311 corresponding to the male person. The terminal responds to the tapping operation to display an interface shown in b in FIG. 3.

On the interface shown in b in FIG. 3, when the terminal selects the male person as a focus tracking object, a small window floats in a large window on a preview interface, and an image corresponding to a position of the focus tracking object in the large window is displayed in the small window. In the small window, the focus tracking object may be in a central position of the small window, to indicate a "main character" role of the focus tracking object. Optionally, after the tracking box of the focus tracking object is triggered, a color of the tracking box corresponding to the focus tracking object may be changed, for example, lightened, darkened, or changed to another color. In addition, a shape of the tracking box may also be changed. For example, the tracking box 311 of the male person is a dashed-line box, and the tracking box 312 of the female person is a combination of a dashed-line box and "+". In this embodiment of this application, a pattern of the tracking box of the focus tracking object and a pattern of a tracking box of another object may be different colors, different sizes, different shapes, or the like, or any combination thereof. In this way, the user distinguishes between the focus tracking object and the another object in the large window. Optionally, after the tracking box of the focus tracking object is triggered, the tracking box corresponding to the focus tracking object may disappear, so that the user does not repeatedly select the selected focus tracking object.

It may be understood that, in the preview mode of the main-character mode, the user may automatically change the focus tracking object after selecting the focus tracking object. As shown on the interface shown in b in FIG. 3, when receiving an operation of tapping the tracking box 312 of the female person by the user, the terminal displays an interface shown in c in FIG. 3. In this case, the focus tracking object in the small window is switched from the male person to the female person. A status of a tracking box of a person is changed. For example, a color and a shape of the tracking box 312 of the female person are changed, and the tracking box 311 of the male person is restored to an unselected pattern. For a pattern change of the tracking box, refer to related descriptions of the interface shown in b in FIG. 3. Details are not described herein again.

Optionally, the terminal switches the focus tracking object in the preview mode. An object displayed in a preview image in the small window is changed from the original focus tracking object to a new focus tracking object. To implement smoother images in a switching process, an embodiment of this application further provides dynamic special effect of switching a focus tracking object. For example, the following describes a design of dynamic special effect by using an example in which the male person is an original focus tracking object and the female person is a new focus tracking object.

In a possible implementation, the large window on the preview interface includes the male person and the female person, and the focus tracking object displayed in the small window is the male person. When the terminal detects a tapping operation for the tracking box of the female person, the preview image in the small window may be switched from focus tracking display of the male person to panoramic display, and then switched from panoramic display to focus tracking display of the female person. For example, the male person is originally centrally displayed in the small window. After the user taps the tracking box of the female person, a cut ratio of the preview image in the small window to the preview image in the large window is increased. The preview image in the small window may include more content of the preview image in the large window. It may be represented as follows: The male person in the small window, a background, and the like are gradually minified, until a panorama of the female person and the male person can be simultaneously displayed in the small window. Then, the female person in the panorama is magnified and then centrally displayed in the small window. Optionally, the panorama may be a preview image that is in the large window and that is scaled down by the same proportion, or may be an image that is obtained through cutting the preview image in the large window in a common region of the male person and the female person.

In another possible implementation, the large window on the preview interface includes the male person and the female person, and the focus tracking object displayed in the small window is the male person. When the terminal detects a tapping operation for the tracking box for the female person, a focus of the preview image in the small window is gradually changed from the male person to the female person. For example, the male person is originally centrally displayed in the small window. After the user taps the tracking box of the female person, the cut ratio of the preview image in the small window to the preview image in the large window remains unchanged, but the preview image in the small window is cut in a direction close to the female person based on the original cut ratio. For example, the female person is located on a left side of the male person. In a process in which the terminal switches the focus tracking object, the male person in the small window and a background are translated rightward, until the female person is centrally displayed in the small window.

In this way, in the process in which the terminal switches the focus tracking object, images are smoother in the process of switching from the original focus tracking object to the new focus tracking object in the small window, thereby improving recording experience of the user.

The foregoing embodiment describes the preview mode of the main-character mode. The following describes the recording mode of the main-character mode with reference to the accompanying drawings. In the recording mode of the main-character mode, the terminal may start video recording of the small window for a focus tracking object, and save the video.

With reference to FIG. 4A and FIG. 4B, the following describes in detail a scenario in a recording mode of a main-character mode.

In a scenario of the recording mode of the main-character mode, video recording of a large window and a small window may be simultaneously started. On an a interface in FIG. 4A, a preview image in the large window includes a focus tracking object (for example, a male person), and a preview image of the focus tracking object is displayed in the small window. When the terminal detects a tapping operation for the recording start control 303 in the large window, the terminal displays an interface shown in b in FIG. 4A. The terminal simultaneously starts large-window recording and small-window recording. Small-window displaying may be implemented in real time for the focus tracking object in the large window. On the b interface in FIG. 4A, a recorded image and a recording time are displayed in the small window. For another example, the small-window recording end control 315 of the recording mode is further displayed in the small window, and the recording start control 303 in the large window is converted into the recording pause control 313 and the recording end control 314 of the recording mode. Respective recording times are respectively displayed in the large window and the small window. The recording times of the large window and the small window may keep consistent. To beautify the recording interface and reduce blocking of the focus tracking object, in this embodiment of this application, a display position of the recording time may be shown in b in FIG. 4A. The recording time may be alternatively set in another position in which recording is not affected.

Optionally, in some embodiments, when the terminal enters the recording mode from the preview mode, the first landscape-portrait switching control, the second landscape-portrait switching control, the zoom control, and the small-window closing control may disappear, as shown in b in FIG. 4A. These controls may be alternatively reserved in some embodiments. This is not limited in this embodiment of this application.

It should be understood that in the scenario shown in FIG. 4A, an occasion in which the terminal is triggered to record an original video and a main-character video is as follows: Before entering the recording mode of the main-character mode, the terminal first detects an operation for a main-character mode control, and in response to the operation, the terminal prepares to start recording of the main-character video (recording is not started). Then, an operation of determining a main character in an original image by the user is detected. After the terminal detects an operation of the user for the recording start control, in response to the operation, the terminal may enter a recording process, and may simultaneously record the original video and the main-character video.

In another scenario of the recording mode of the main-character mode, video recording of the large window and the small window may be performed in sequence. On an a interface in FIG. 4B, a preview image in the large window includes a focus tracking object, and the small window is not opened because the terminal does not select the focus tracking object. In response to the tapping operation of the user for the recording start control 303, the terminal starts large-window recording and displays the interface shown in b in FIG. 4B. On the b interface in FIG. 4B, a recorded image and a recording time are displayed in the large window, and the terminal does not open the small window. In a recording process of the large window, when the terminal detects a tapping operation of selecting the tracking box 311 by the user, the terminal displays an interface shown in c in FIG. 4B. On the c interface in FIG. 4B, the terminal keeps large-window recording and starts small-window recording.

The terminal may enable video recording of the small window based on the foregoing scenario, and obtain a plurality of paths of videos. It should be noted that an image related to the focus tracking object in the large window may be displayed in the small window. However, a video recorded in the small window and a video recorded in the large window are a plurality of independent videos, and are not a composite video in a picture-in-picture form in which the small window is embedded in the recorded image in the large window.

It should be noted that if the terminal does not enable small-window recording, the terminal may obtain one path of video recorded in the large window. If the terminal enables small-window recording, the terminal may obtain one path of video recorded in the large window and a plurality of paths of videos recorded in the small window. For example, in a video recording period of the large window, the terminal may enable small-window recording for a plurality of times. When detecting a tapping operation for the small-window recording end control, the terminal may end small-window recording to obtain one path of video. After small-window recording is enabled again, the terminal may obtain a new video. A quantity of videos obtained in the small window may be related to a quantity of times of enabling small-window recording.

It should be understood that an occasion in which the terminal is triggered to record an original video and a main-character video is as follows: Before entering the recording mode of the main-character mode, the terminal first detects an operation for the main-character mode control, and in response to the operation, the terminal prepares to start recording of the main-character video (recording is not started). Then, before the terminal enters the recording mode of the main-character mode, an operation of determining a main character in an original image by the user is not detected. After the terminal detects an operation of the user for the recording start control, in response to the operation, the terminal may enter the recording mode of the main-character mode. In this case, the terminal records only the original video but not the main-character video. In a process of recording the original video, the terminal may detect an operation of determining the main character for the original image by the user, and in response to the operation, the terminal may be triggered to record the main-character video.

It should be understood that an occasion in which the terminal detects the main character may be alternatively another occasion in addition to an occasion in which the user selects the main character for the original image. For example, after an operation (for example, a tapping operation) for the main-character mode control is detected, before an operation for the recording start control is detected, when the operation of selecting the main character for the original image by the user is not detected in a first time threshold, the terminal may automatically determine the main character based on the original image. In this case, a manner of determining the main character includes: recognizing a moving object in a central region of the original image, and determining the object as the main character. A center of the original image is a geometric center of the original image.

When the user does not need to use the main-character mode, the user may choose to exit the main-character mode and restore the normal recording mode.

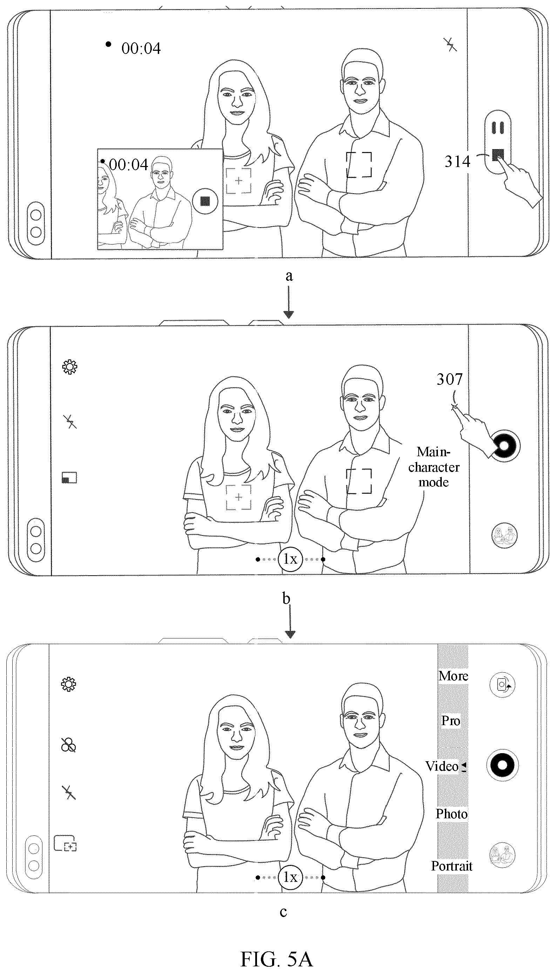

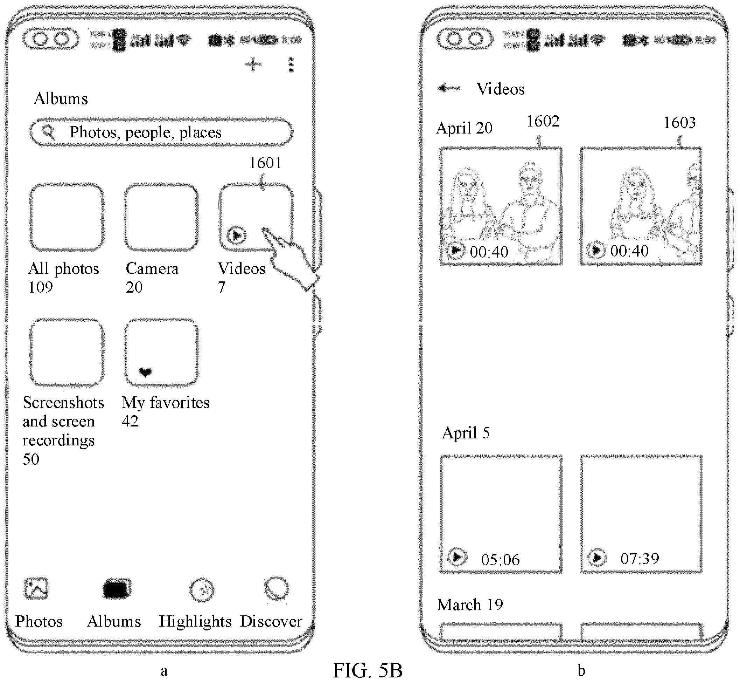

With reference to FIG. 5A, the following describes a scenario of exiting a main-character mode according to an embodiment of this application.

As shown in FIG. 5A, for example, when the terminal receives a tapping operation for the recording end control 314 on an a interface in FIG. 5A, the terminal may simultaneously end large-window recording and small-window recording. In addition, the terminal displays a b interface in FIG. 5A. When the terminal ends recording, a video (an original video) recorded in a large window and a video recorded (an original video) in a small window may be simultaneously saved. The terminal may save the two videos in a same path, or may save the two videos in different paths. For example, the video of the large window and the video of the small window may be saved in a folder in an album; or the video of the large window may be saved in a conventional path, and the video of the small window may be saved in a folder of the main-character mode in the album. Paths of saving the two videos are not limited in this embodiment of this application.

On the b interface in FIG. 5A, large-window recording and small-window recording are ended, and the preview mode is restored. When receiving a tapping operation for the main-character mode exit control 307, the terminal displays an interface shown in c in FIG. 5A. The terminal restores the normal recording mode. Certainly, after detecting a tapping operation for the recording end control 314 on the a interface in FIG. 5A, the terminal may directly exit the main-character mode, and display the interface shown in c in FIG. 5A. Alternatively, the user may trigger, by using a method such as a gesture, the terminal to exit the main-character mode. This is not limited in this embodiment of this application.

After the terminal enters the main-character mode, when recording is ended, the terminal may obtain at least one path of video, and save and view the at least one video.

With reference to FIG. 5B, the following describes a process of saving and viewing the recorded video in the main-character mode.

Optionally, the user may browse, based on an album of a camera application, a video recorded in the large window and a plurality of paths of videos recorded in the small window. A display sequence of the plurality of paths of videos may be a video recording sequence. In other words, the terminal may arrange the videos based on end time points or start time points of the recorded videos. The display sequence of the plurality of paths of videos may be alternatively an inverted video recording sequence. In other words, the terminal may arrange the videos in an inverted sequence based on end times or start times of the recorded videos.

Optionally, the video recorded in the large window and the video recorded in the small window may be displayed in video thumbnails on the same album interface. For ease of distinguishing between the video recorded in the large window and the video recorded in the small window, the terminal may set an identifier of the video recorded in the small window. For example, the terminal may add an outer frame, a font, a graph, and the like to the video recorded in the small window, and the terminal may further set a size of the video thumbnail of small-window recording. In this case, there is a size difference between the video thumbnail of small-window recording and the video thumbnail of large-window recording. It may be understood that a form of the video thumbnail in the album is not limited in this embodiment of this application.

For example, an arrangement sequence of the video thumbnails may be shown in FIG. 5B. The user may browse recorded videos on an interface shown in a in FIG. 5B. When the terminal detects a tapping operation for a video icon 1601, the terminal displays an interface shown in b in FIG. 5B. A currently recorded video thumbnail may be displayed on the b interface in FIG. 5B. A video 1602 and a video 1603 may be a plurality of paths of videos that are obtained through a single time of recording in the main-character mode. The following describes a video sequence with reference to a specific recording scenario.

For example, the terminal performs recording based on the main-character mode. A recording interface includes the large window and the small window. The male person and the female person are displayed in the large window. The male person is displayed in the small window. When the terminal detects a tapping operation for the recording start control, the video 1602 including the male person and the female person is recorded in the large window of the terminal, and the video 1603 of the focus-tracking male person is recoded in the small window. After 40s, the terminal detects a tapping operation for the recording end control, the terminal ends recording of the video 1602 and the video 1603, and saves the video 1602 and the video 1603.

In the foregoing recording scenario, the terminal performs recording by using the main-character mode at a time to obtain two paths of videos.

In some instances, the terminal may save the videos based on end times of the plurality of paths of videos, and a first saved video is arranged in a rear position on the b interface in FIG. 5B.

It may be understood that this embodiment of this application describes examples of an arrangement sequence of video thumbnails and a saving sequence of videos. This is not limited in this embodiment of this application.

It may be understood that the video (the original video) recorded in the large window may include an image and a sound, and the video (the main-character video) recorded in the small window may also include an image and a sound. For example, when the terminal cuts a recorded image in the small window from an image in the large window to obtain the video in the small window, the terminal may further synchronize the sound to the video in the small window.

It should be understood that, in the preview mode of the main-character mode, to improve recording experience of the user, the terminal may provide other functions. The functions include but are not limited to the following functions.

In some embodiments, the terminal may lose a focus tracking object in the focus tracking mode. In other words, in the focus tracking mode, after determining to perform focus tracking, the terminal may start to recognize the focus tracking object. In this case, it is possible that the terminal cannot recognize the focus tracking object. In this case, a preview image in the small window may be a final frame of preview image displayed before the focus tracking object is lost, and the small window is in a masked state. After the focus tracking object is lost, if the focus tracking object is detected again, the focus tracking object may be continuously tracked. The masked state is canceled for the small window. The preview image including the focus tracking object may be displayed. After a time in which a focus is lost reaches a specified threshold (for example, 5s), the small window may be closed. In the recording mode of the focus tracking mode, the video (a focus tracking video) in the small window may be saved after the small window is closed.

In some other embodiments, a specification of the small window may be customized. The user may adjust the specification of the small window to an appropriate size, so that the user can more clearly view the preview image of the focus tracking object in the small window. A display position of the small window on the interface may also be adjusted.

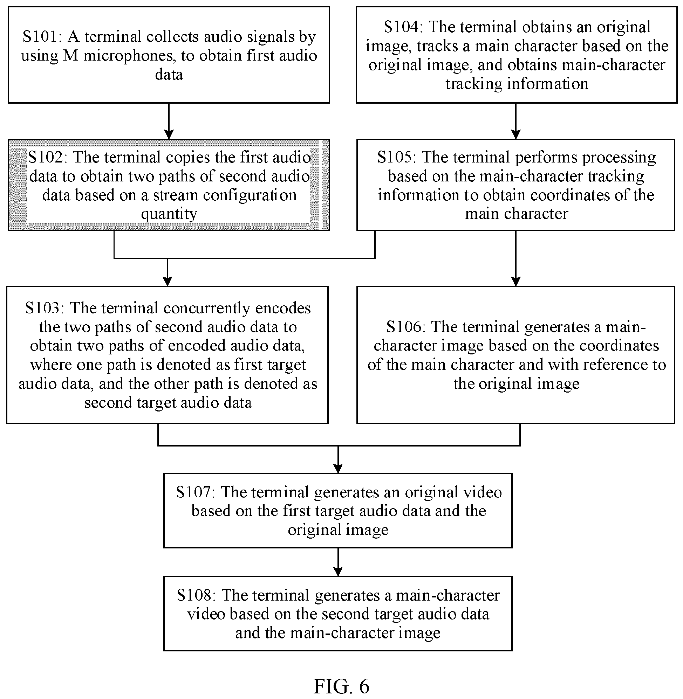

FIG. 6 is a flowchart of an example of recording an original video and a main-character video according to an embodiment of this application.

In a recording process, a terminal processes in real time audio data collected by a microphone and an image captured by a camera, to obtain the original video and the main-character video. FIG. 6 describes a process of processing in real time a frame of image and audio data corresponding to the frame of image at a same capturing time, to obtain a video. A processing process of another frame of image and another frame of video is the same as the processing process of the frame of image and the audio data corresponding to the frame of image. Refer to the related descriptions.

For detailed description of this process, refer to the following descriptions of step S101 to step S108.

S101: The terminal collects audio signals by using M microphones, to obtain first audio data.

At a first moment, the terminal collects the audio signals by using the M microphones. In a process of recording an original video and a main-character video, the terminal may enable some or all of microphones to collect audio signals. The terminal has S microphones. The M microphones are selected to collect the audio signals. Herein, M is an integer greater than or equal to 1, and S is an integer greater than or equal to M.

The terminal may process the collected audio signals to obtain one path of first audio data.

The first audio data includes the audio signals collected by the M microphones of the terminal and information about the audio signals. The information about the audio signals may include a timestamp, a data length, a sampling rate, a data format, and the like. The timestamp indicates a time at which the M microphones collect the audio signals. The data length indicates a length of an audio signal included in the first audio data. The data format may indicate a format of the first audio data. The audio signals collected by the M microphones may be considered as audio signals for generating N videos.

In some instances, the audio signals collected by the M microphones of the terminal may be encapsulated into one frame of audio signal, and the first audio data is obtained based on the frame of audio signal.

In some other instances, each of the audio signals collected by the M microphones of the terminal may be encapsulated into one frame of audio signal to obtain M frames of audio signals, and the first audio data is obtained based on the M frames of audio signals.

S102: The terminal copies the first audio data to obtain two paths of second audio data based on a stream configuration quantity.

In step S102, the terminal generates the original video and the main-character video. A quantity of videos herein is 2.

The second audio data may include a part or all of content in the first audio data. Generally, the second audio data may include a part of content in the first audio data. The part of content can be used to generate a video. Other content that cannot be used to generate a video may not be copied herein.

In some instances, the terminal may copy an audio signal in the first audio data, a timestamp of the audio signal, and a data length of the audio signal to obtain two same paths of second audio data. One path of second audio data includes the audio signal in the first audio data, the timestamp of the audio signal, and the data length of the audio signal.

In some other instances, in addition to the audio signal in the first audio data, the timestamp of the audio signal, and the data length of the audio signal, the second audio data may further include a data format. The data format may indicate a format (audiodata) of the second audio data. A format (audiodata) of a second path of audio data may be: {buffer, buffersize, pts}. Herein, buffer represents the audio signal and may be in an array form, buffersize represents the data length of the audio signal, and pts represents the timestamp of the audio signal.

Subsequently, in step S103, step S107, and step S108, the terminal may generate the original video and the main-character video based on the two paths of second audio data.

S103: The terminal concurrently encodes the two paths of second audio data to obtain two paths of encoded audio data. One path is denoted as first target audio data, and the other path is used as second target audio data.

In some instances, the terminal may concurrently encode the two paths of second audio data to obtain the two paths of encoded audio data. One path is denoted as the first target audio data, and the other path is used as the second target audio data.

S104: The terminal obtains an original image, tracks a main character based on the original image, and obtains main-character tracking information.

At a first moment, the terminal captures the original image by using a camera. Any original image corresponds to one timestamp. The timestamp indicates a time at which the camera captures the original image.

The terminal determines the main character in the original image, and obtains the main-character tracking information. The main-character tracking information may include at least one piece of information such as a face (face) region of the main character, a body (bady) region of the main character, coordinates of a center (center) of the main character, and a track status (trackstatus) corresponding to the main character.

The focus tracking status indicates a case in which the main character appears in the original image. In some examples, the focus tracking status may include an appearance in the original image or an absence from the original image.

S105: The terminal performs processing based on the main-character tracking information to obtain the coordinates of the main character.

When the terminal determines that the focus tracking status is the appearance in the original image, the terminal may perform processing based on the main-character tracking information to obtain the coordinates of the main character.

In some examples, the coordinates of the main character may be the coordinates of the center (center) of the main character.

In some other examples, the coordinates of the main character may be coordinates determined based on the face (face) region of the main character, the body (bady) region of the main character, and the coordinates of the center (center) of the main character, for example, coordinates of a face.

In some instances, when the focus tracking status is the absence from the original image, coordinates of a new main character may be not determined based on the main-character tracking information. The coordinates of the main character that are calculated based on a previous frame of original image may be used as the coordinates of the main character in step S105. In a third preset time, the focus tracking status is continuously the absence from the original image, and the terminal may no longer record the main-character video and save the recorded main-character video.

In some possible cases, the coordinates of the main character may be coordinates in a coordinate system (two-dimensional coordinate system) of a camera sensor (camera sensor, that is, an image sensor), and are used to indicate a position of the main character in an image. In some other possible cases, the coordinates of the main character may be alternatively in an image coordinate system.

S106: The terminal generates a main-character image based on the coordinates of the main character and with reference to the original image.

The terminal may determine an image region in which the coordinates of the main character are located in the original image, cut the original image to obtain content in the image region, and generate the main-character image based on the content in the image region. In some instances, the image region may be centered on the coordinates of the main character.

Any main-character image corresponds to one timestamp. The timestamp is the same as a timestamp of the original image.

S107: The terminal generates the original video based on the first target audio data and the original image.

The terminal encodes the original image to obtain an encoded original image. An occurrence occasion of the process may be the same as or different from an occurrence occasion in which the terminal encodes the second audio data.

When the terminal determines that the timestamp of the audio signal included in the first target audio data is the same as the timestamp of the original image, the terminal may perform stream mixing based on the first target audio data and the encoded original image to generate the original video.

S108: The terminal generates the main-character video based on the second target audio data and the main-character image.

The terminal encodes the main-character image to obtain an encoded main-character image. An occurrence occasion of the process may be the same as or different from an occurrence occasion in which the terminal encodes the second audio data.

When the terminal determines that the timestamp of the audio signal included in the second target audio data is the same as the timestamp of the main-character image, the terminal performs stream mixing based on the second target audio data and the encoded main-character image to generate the main-character video.

Encoding of the first target audio data in step S107 and encoding of the second target audio data in step S108 are performed concurrently. In this way, it can be ensured that the original video and the main-character video are obtained in real time.

An occasion of performing step S101 and an occasion of performing step S104 are not in sequence. Step 101 and step S104 can be performed after the terminal starts video recording.

It should be understood that, in the foregoing step S101 to step S108, an example in which the videos recorded by the terminal are the original video and the main-character video, and a stream configuration quantity is 2 is used. In an actual case, the stream configuration quantity is N, where N is an integer greater than or equal to 1. If the stream configuration quantity is N, the terminal may copy the first audio data to obtain N paths of second audio data. Then, encoding is concurrently performed based on the N paths of audio data to generate N videos. One path of second audio data is used to generate one video.

In conventional technologies, the terminal obtains only one path of first audio data. In this application, to obtain the N videos in real time, the terminal needs to copy the path of first audio data to obtain the N paths of second audio data, concurrently encode the N paths of second audio data to obtain audio streams corresponding to the N videos, and perform stream mixing on an audio stream corresponding to each video and an image stream corresponding to the video, to generate the N videos. For detailed descriptions of the process, refer to the following content.

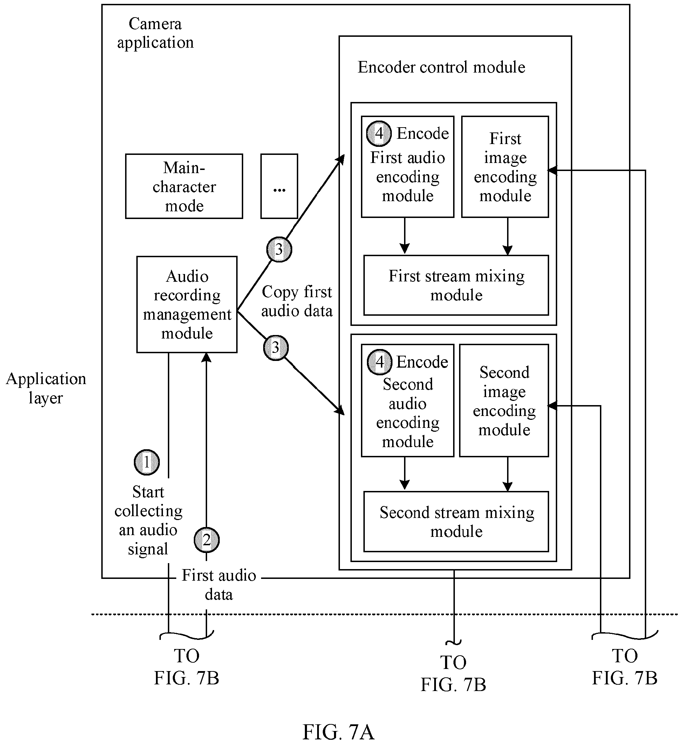

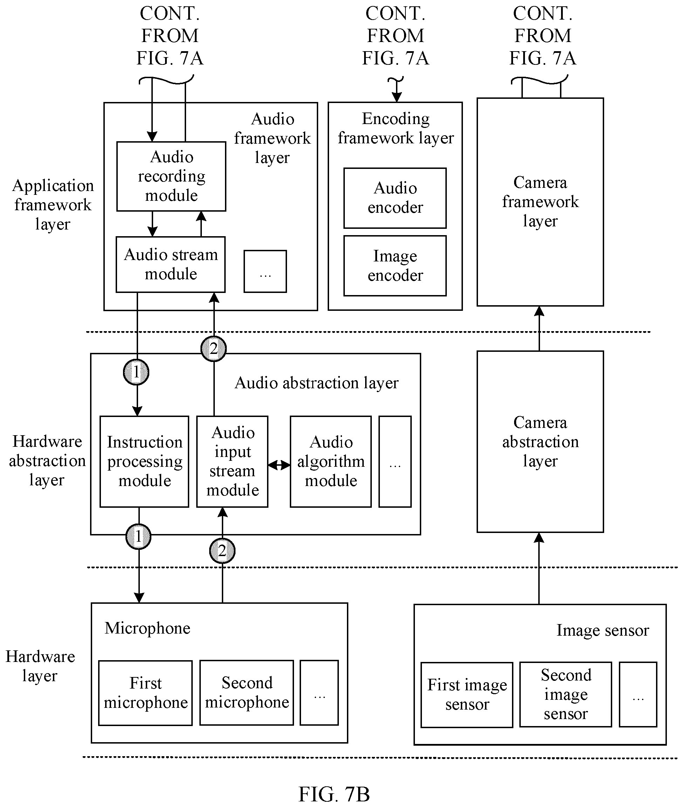

FIG. 7A and FIG. 7B are a schematic block diagram of a software structure of a terminal that copies one path of audio data to obtain N paths of audio data and performs concurrent encoding.

In a layered architecture, software is divided into several layers, and each layer having a clear role and task. Layers communicate with each other through a software interface. In some embodiments, the system is divided into four layers, which are respectively an application layer, an application framework layer, a hardware abstraction layer, and a hardware layer from top to bottom.

The application layer may include a series of application packages. The application packages may include a camera application. In addition to the camera application, another application may be further included, for example, an application such as a gallery application (also referred to as an application).

The camera application may include a main-character mode, an audio recording management module, and an encoder control module.

The main-character mode is used to provide a function of entering a mode and recording a main-character video for the terminal.

The audio recording management module may be used to enable or stop a microphone of the terminal to collect an audio signal, and may be further used to copy obtained first audio data to obtain N paths of second audio data.

The encoder control module may be used to perform concurrent encoding on the N paths of second audio data.

The application framework layer provides an application programming interface (application programming interface, API) and a programming framework for applications at the application layer. The application framework layer includes some predefined functions.

The application framework layer may include an audio framework layer, a camera framework layer, and an encoding framework layer.

The audio framework layer includes an audio recording module and an audio stream module. The audio recording module prestores a microphone related to recording an original video and the main-character video by the terminal. For example, there may be S microphones of the terminal. The audio recording module may be controlled to select M microphones from the S microphones to collect audio signals. Herein, M is an integer greater than or equal to 1, and S is an integer greater than or equal to M.

The encoding framework layer may provide an encoding capability for the encoder control module at an upper layer. An audio encoder at the encoding framework layer may provide a capability of encoding audio data for an audio encoding module (including a first audio encoding module and a second audio encoding module) in the encoder control module. An image encoder at the encoding framework layer may provide a capability of encoding an image for an image encoding module (including a first image encoding module and a second image encoding module) in the encoder control module.

The hardware abstraction layer is an interface layer that is located between a kernel layer (not shown) and a hardware layer, and is designed to abstract hardware and provide a virtual hardware platform for an operating system.

The hardware abstraction layer may include different hardware abstraction layers, for example, a camera abstraction layer and an audio abstraction layer. The camera abstraction layer may be used to abstract an image sensor (a sensor in a camera), and perform various types of calculation based on an image captured by the image sensor to obtain an output result. The audio abstraction layer may be used to abstract a microphone, and perform various types of calculation based on an audio signal collected by the microphone to obtain an output result.

The audio abstraction layer includes an instruction processing module, an audio input stream module, and an audio algorithm module.

The instruction processing module may be used to receive an instruction delivered by the audio framework layer at an upper layer and process the instruction. For example, the instruction processing module may receive a related instruction that is sent by the audio abstraction layer and that is for starting the microphone to collect the audio signal. After the instruction is received, the microphone may be started to collect the audio signal.

The audio input stream module may process the audio signal collected by the microphone to obtain one path of first audio data. The first audio data includes information about the audio signal collected by the microphone, for example, a timestamp, a data length, a sampling rate, and a data format. The first audio data is sent to the audio recording module.

The audio algorithm module may interact with the audio input stream module and process the audio signal collected by the microphone.

The hardware layer may include the microphone of the terminal and the image sensor (the sensor in the camera) of the terminal. The microphone may be used to collect an audio signal. The image sensor is used to capture an image.

After an original image captured by the image sensor is transmitted to the camera framework layer through the camera abstraction layer, the camera framework layer may generate a main-character image based on the original image. The original image and the main-character image are respectively transmitted to the first image encoding module and the second image encoding module for encoding, to obtain an encoded original image and an encoded main-character image. Subsequently, a first stream mixing module may perform stream mixing based on the encoded original image and the path of encoded second audio data to generate the original video. Subsequently, the first stream mixing module may perform stream mixing based on the encoded main-character image and the other path of encoded second audio data to generate the main-character video.

With reference to FIG. 7A and FIG. 7B, the following embodiment of this application specifically describes a schematic processing procedure in which the terminal copies the first audio data to obtain the N paths of second audio data, and concurrently encodes the N paths of second audio data.

Step 1: When determining to enter a main-character mode, the audio recording management module detects an operation for a recording start control, and may invoke, by using the audio framework layer and the audio abstraction layer, the M microphones of the terminal to start to collect the audio signals. An audio copy quantity N may be further determined after the operation for the recording start control is detected. Step 1 is a gray circular identifier ① in FIG. 7A and FIG. 7B.

In some possible cases, with reference to the foregoing descriptions of FIG. 2C, when an operation for the main-character mode control 404 is detected, the audio recording management module may determine to enter the main-character mode. After entering the main-character mode, the terminal may display the user interface shown in FIG. 2D.

For example, when determining to enter the main-character mode, the audio recording management module detects the operation for the recording start control, and may determine the stream configuration quantity N. In addition, the audio recording management module may send a first instruction to the audio recording module at the audio framework layer. The first instruction is used to start the microphone to collect the audio signal. After receiving the instruction, the audio recording module may determine the M microphones for collecting the audio signals, and then send a second instruction to the audio stream module. The second instruction is used to start the M microphones to collect the audio signals. The audio stream module may send the second instruction to the instruction processing module. After parsing the second instruction, the instruction processing module may start the M microphones in the terminal to collect the audio signals.

Step 2: The audio signals collected by the M microphones may be transmitted to the audio abstraction layer. The audio abstraction layer may perform processing based on the audio signals to generate first audio data. Then, the first audio data is transmitted to the audio recording management module by using the audio framework layer. Step 2 is a gray circular identifier ② in FIG. 7A and FIG. 7B.

For example, the audio signals collected by the M microphones may be transmitted to the audio input stream module at the audio abstraction layer, and the audio input stream module may encapsulate, into frames, the audio signals collected by the microphones, to obtain the first audio data. Then, the audio input stream module may send the first audio data to the audio stream module at the audio framework layer, and then the audio stream module sends the first audio data to the audio recording module. The audio recording module then sends the first audio data to the audio recording management module.

Step 3: The audio recording management module may copy the first audio data based on the stream configuration quantity N to obtain the N same paths of second audio data. Herein, an example in which N is equal to 2 is used for description. Then, the two paths of second audio data are separately sent to the encoder control module. Step 3 is a gray circular identifier ③ in FIG. 7A.

In some possible cases, with reference to the foregoing related content shown in b in FIG. 4A and the related content shown in c in FIG. 4B, a case in which the stream configuration quantity N is equal to 2 is a case in which the terminal further records the main-character video while recording the original video.

In some possible cases, the stream configuration quantity N may be alternatively greater than 2. For example, when the terminal records two main-character videos and one original video, the terminal may determine two main characters and separately track the two main characters, to obtain the two main-character videos.

In some other possible cases, the stream configuration quantity N may be alternatively equal to 1. With reference to the foregoing related content shown in b in FIG. 4B, in this case, the terminal does not record the main-character video, and only records the original video. In this case, N=1.

For example, the audio recording management module then sends one path of second audio data to the first audio encoding module in the encoder control module, and sends another path of second audio data to the second audio encoding module in the encoder control module.

Step 4: The encoder control module may perform concurrent encoding on the N paths of second audio data by using an encoder. Step 4 is a gray circular identifier ④ in FIG. 7A.

For example, the first audio encoding module may invoke the audio encoder to encode one path of second audio data to obtain the first target audio data. In addition, the second audio encoder may invoke the audio encoder to encode another path of second audio data to obtain the second target audio data.

In this way, when the N videos are generated in a recording process, although only one path of first audio data is obtained at the audio abstraction layer, and only the path of first audio data is transmitted to the camera application at the application layer, audio data related to video generation in the first audio data in the camera application may be copied to obtain the N paths of second audio data related to the N videos.

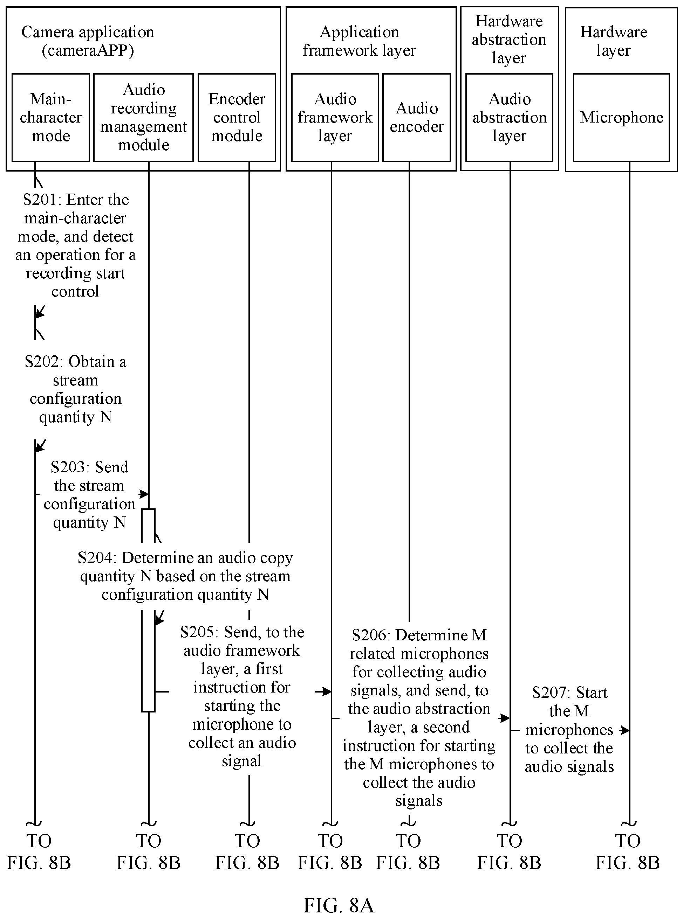

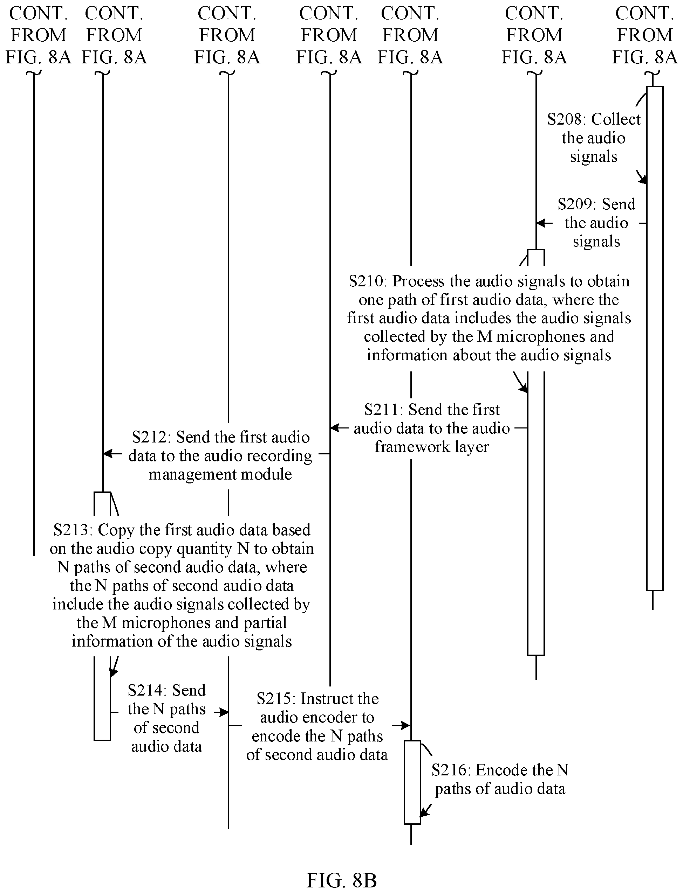

FIG. 8A and FIG. 8B are a schematic flowchart of interaction between modules when a terminal copies one path of audio data to obtain N paths of audio data and performs concurrent encoding.

With reference to FIG. 7A, FIG. 7B, FIG. 8A, and FIG. 8B, the following describes in detail a detailed process in which each module of a terminal copies first audio data in a video recording process to obtain N paths of second audio data and concurrently encodes the N paths of second audio data.

For this process, refer to the following detailed descriptions of step S201 to step S216.

S201: The terminal enters a main-character mode and detects an operation for a recording start control.

As shown on the interface in FIG. 2C, when detecting an operation (for example, a tapping operation) for a main-character mode control, the terminal determines to enter the main-character mode.

In some instances, after the terminal determines to enter the main-character mode, before the terminal detects an operation for a recording start control, a main character is determined. When the operation for the recording start control is detected, the terminal may simultaneously start recording of an original video and a main-character video in response to the operation. For example, as shown in FIG. 4A, when detecting the operation (for example, a tapping operation) for the recording start control, the terminal may start recording of the original video and the main-character video.

In some other embodiments, after the terminal determines to enter the main-character mode, before the terminal detects an operation for a recording start control, a main character is not determined. When the operation for the recording start control is detected, in response to the operation, the terminal may start recording of an original video but does not record a main-character video. For example, as shown in a and b in FIG. 4B, when detecting the operation (for example, a tapping operation) for the recording start control, the terminal may start recording of the original video but does not record the main-character video.

S202: Obtain a stream configuration quantity N in the main-character mode.

After the terminal starts video recording, the terminal may determine the stream configuration quantity N. The quantity N is a quantity of configured video streams. The stream configuration quantity N is a quantity of video streams involved when the terminal generates videos. It should be understood that different videos recorded by the terminal correspond to different video streams. If the terminal records N videos, a quantity of video streams is N.

An occasion of obtaining the stream configuration quantity N in the main-character mode includes but is not limited to the following occasions:
(1) The operation for the recording start control is detected. In response to the operation, the terminal starts video recording, and the terminal may determine the stream configuration quantity N. After the terminal starts video recording, the stream configuration quantity N in the main-character mode may be newly determined in the following cases, including but not limited to:
   Case 1: When detecting an operation of determining the main character, the terminal may newly determine a stream configuration quantity N to update the stream configuration quantity N.
   Case 2: When the main character is lost, the terminal may newly determine a stream configuration quantity N to update the stream configuration quantity N.
   Case 3: When detecting an operation of stopping recording of the main-character video, for example, an operation for a small-window recording end control, the terminal may newly determine a stream configuration quantity N to update the stream configuration quantity N.
(2) After the terminal starts video recording, the terminal may determine the stream configuration quantity N according to a specific time frequency.

If it is determined that the video recorded by the terminal includes only the original video and does not include the main-character video, the stream configuration quantity N is equal to 1. If the video recorded by the terminal includes both the original video and the main-character video, the stream configuration quantity N is equal to 2.

In another possible case, the terminal may alternatively generate more videos in a recording process. In this case, N may be greater than or equal to 3.

In some possible cases, the stream configuration quantity N in the main-character mode may be determined based on a stream management module (not shown in FIG. 7A and FIG. 7B). The stream management module may be used to configure a video stream, and N is a quantity of configured video streams.

S203: The stream configuration quantity N in the main-character mode is sent to an audio recording management module.

After receiving the stream configuration quantity N, the audio recording management module may perform an initialization setting, and perform step S204 and step S205 below to subsequently obtain content related to N paths of second audio data.

S204: The audio recording management module determines an audio copy quantity N based on the stream configuration quantity N.

The audio copy quantity N is used for determining a quantity of copies of first audio data in the following step S213. The audio copy quantity N is equal to the stream configuration quantity N. In this way, in a video recording process, N videos may be generated based on N paths of copied audio data.

In some possible cases, after determining the audio copy quantity N, the audio recording management module may further configure sound channel information. In this case, when N is equal to 2, two channels may be configured. Subsequently, an audio signal collected by a microphone may be divided into two channels, to obtain a two-channel audio signal as the first audio data.

S205: The audio recording management module sends, to an audio framework layer, a first instruction for starting the microphone to collect the audio signal.

The first instruction is used to instruct and start the microphone to collect the audio signal. In this case, the terminal may not determine a specific related microphone for collecting an audio signal, and may determine the microphone in the following step S205.

The first instruction carries related parameters used when the microphone of the terminal collects the audio signal, including a sampling rate, an audio format, and the like. The sampling rate may indicate a frequency at which the microphone collects the audio signal. The audio format is used for determining a sampling depth of collecting an audio signal by each microphone, that is, a quantity of bytes occupied by each sampling point of an audio signal collected by one microphone, for example, 8 bits or 16 bits. In addition to these parameters, other parameters such as path configuration may be further included. Details are not described herein.

After receiving the first instruction, the audio framework layer may generate a second instruction related to the following step S206, and perform the following step S206.

In some instances, for example, with reference to FIG. 7A and FIG. 7B, the audio recording management module may specifically send the first instruction to the audio recording module at the audio framework layer.

S206: The audio framework layer determines M related microphones for collecting audio signals, and send, to an audio abstraction layer, the second instruction for starting the M microphones to collect the audio signals.

The second instruction is used to instruct and start the M microphones to collect the audio signals, that is, determine the related microphones for collecting the audio signals. For example, when the terminal includes three microphones, the terminal may determine to use a first microphone and a second microphone in the three microphones to collect audio signals. A specific microphone for collecting an audio signal is preset at the audio framework layer.

The second instruction still carries related parameters used when the microphone collects the audio signal, including a sampling rate, an audio format, and the like. For descriptions of the parameters, refer to the foregoing descriptions of step S205. Details are not described herein again.

In some instances, for example, with reference to FIG. 7A and FIG. 7B, an audio recording module at the audio framework layer may be used to send the second instruction to an audio stream module, and the audio stream module sends the second instruction to an instruction processing module at the audio abstraction layer.

S207: The audio abstraction layer starts the M microphones to collect the audio signals.

After receiving the second instruction, the audio abstraction layer may determine the M related microphones for collecting the audio signals, and start the M microphones to collect the audio signals. In other words, there are S microphones of the terminal. The M microphones may be selected from the S microphones to collect the audio signals. Herein, M is an integer greater than or equal to 1, and S is an integer greater than or equal to M.

S208: The M microphones collect the audio signals.

The audio signals collected by the M microphones may include a sound of a photographed object (for example, the foregoing related object 1) and an ambient sound.

S209: The M microphones send the collected audio signals to the audio abstraction layer.

In some instances, with reference to FIG. 7A and FIG. 7B, the M microphones may send the collected audio signals to an audio input stream module at the audio abstraction layer.

S210: The audio abstraction layer processes the audio signals to obtain one path of first audio data. The first audio data includes the audio signals collected by the M microphones and information about the audio signals.

The first audio data includes the audio signals collected by the M microphones and the information about the audio signals.

The audio abstraction layer encapsulates, into a frame, the audio signals collected by the M microphones, and determines the information about the audio signals. The information about the audio signals may include a timestamp, a data length, a sampling rate, a data format, and the like. The timestamp indicates a time at which the M microphones collect the audio signals. The data length indicates a length of an audio signal included in the first audio data. The data format may indicate a format of the first audio data.

That the audio abstraction layer encapsulates, into the frame, the audio signals collected by the M microphones may include: encapsulating, into one frame of audio signal, the audio signals collected by the M microphones of the terminal, and obtaining the first audio data based on the frame of audio signal.

In some instances, with reference to FIG. 7A and FIG. 7B, a process related to step S210 may be completed by the audio input stream module included in the audio abstraction layer.

Subsequently, after the following step S211 and step S212, the terminal may transmit the first audio data from the audio abstraction layer to the audio recording management module at an application layer.

S211: The audio abstraction layer sends the first audio data to the audio framework layer.

In some instances, with reference to FIG. 7A and FIG. 7B, specifically, the audio input stream module at the audio abstraction layer may send the first audio data to the audio stream module at the audio framework layer.

S212: The audio framework layer sends the first audio data to the audio recording management module.

In some instances, with reference to FIG. 7A and FIG. 7B, the audio stream module at the audio framework layer may send the first audio data to the audio recording module, and then the audio recording module sends the first audio data to the audio recording management module.

S213: The audio recording management module copies the first audio data based on the audio copy quantity N to obtain N paths of second audio data. The second audio data includes the audio signals collected by the M microphones and partial information of the audio signals.

The N paths of second audio data are the same audio data.

Generally, the second audio data may include a part of content in the first audio data. The part of content can be used to generate a video. Other content that cannot be used to generate a video may not be copied herein.

In some instances, the audio recording management module may copy an audio signal in the first audio data, a timestamp of the audio signal, and a data length of the audio signal to obtain the N same paths of second audio data. One path of second audio data includes the audio signal in the first audio data, the timestamp of the audio signal, and the data length of the audio signal.

The timestamp of the audio signal may be used to match a timestamp of an image. Stream mixing can be performed on only an audio signal and an image having the same timestamp after encoding, to generate a video.

The data length of the audio signal may be used for a test in the following step S216. A function of the test is to determine validity of the second audio data. In step S216, valid second audio data may be encoded, and invalid second audio data may be not encoded.

In some instances, the audio recording management module can copy the first audio data only when it is determined that the first audio data is correct. A manner of determining that the first audio data is correct includes: determining that a data length of an audio signal included in the first audio data is equal to a minimum data length. The minimum data length is determined based on parameters such as the foregoing related sampling rate and data format.

Subsequently, the terminal may perform the following step S214 to step S216 to concurrently encode the N paths of second audio data to obtain N paths of encoded audio data, thereby generating N videos in real time.

S214: The audio recording management module sends the N paths of second audio data to an encoder control module.

In some instances, with reference to FIG. 7A and FIG. 7B, the audio recording management module may send the N paths of second audio data respectively to different audio encoding modules in the encoder control module. An example in which N is equal to 2 is used for description. The audio recording management module may send one path of second audio data to a first audio encoding module in the encoder control module, and send the other path of second audio data to a second audio encoding module in the encoder control module.

S215: The encoder control module instructs an audio encoder to encode the N paths of second audio data.

In some instances, with reference to FIG. 7A and FIG. 7B, different audio encoding modules (including the first audio encoding module and the second audio encoding module) in the encoder control module may invoke the audio encoder to encode the received second audio data.

S216. The audio encoder encodes the N paths of second audio data.

The audio encoder may concurrently encode the N paths of second audio data to obtain the N paths of encoded audio data.

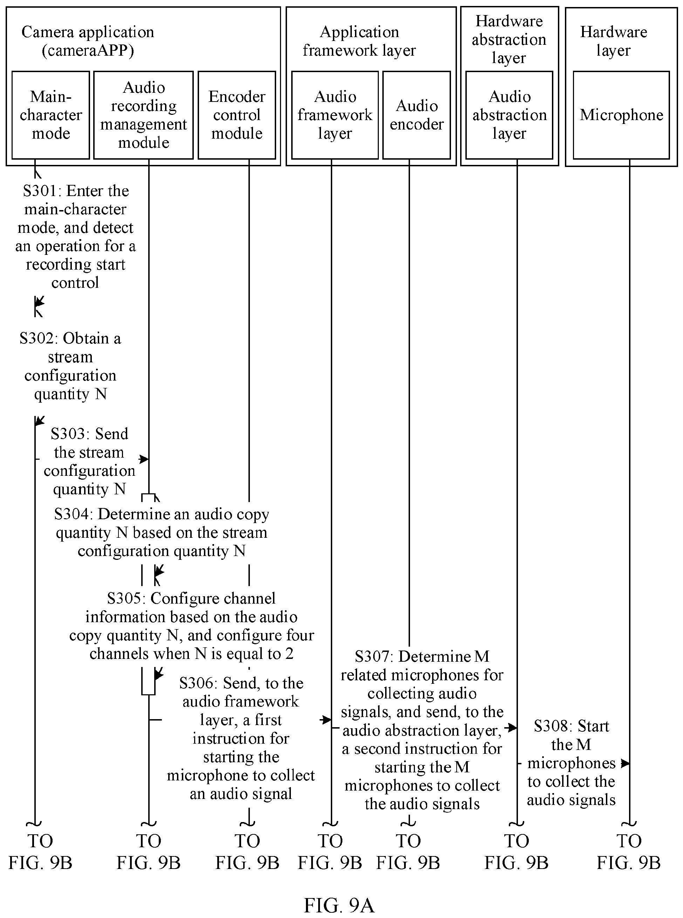

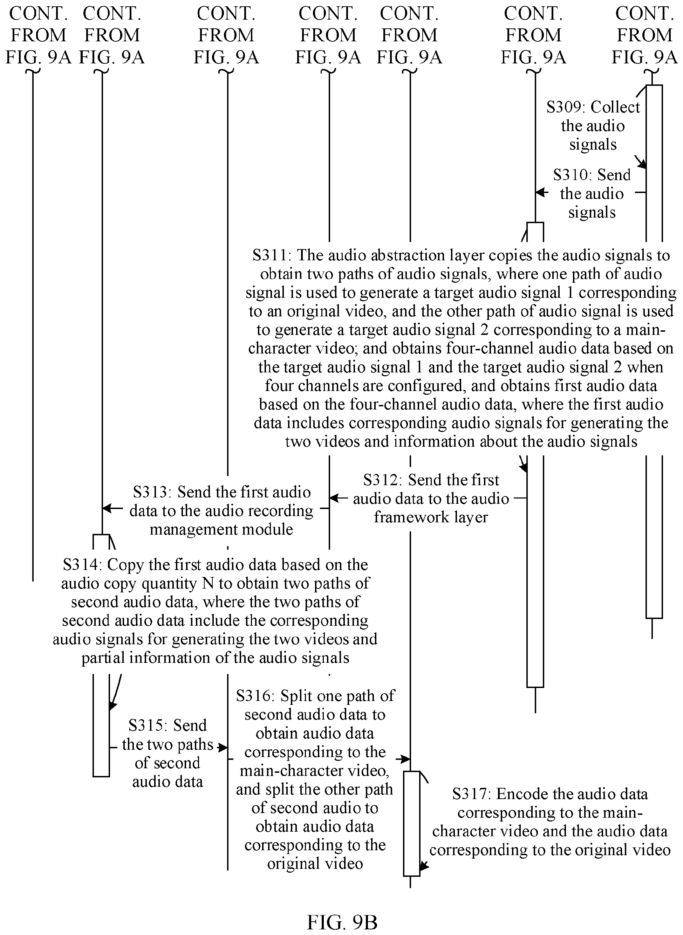

FIG. 9A and FIG. 9B are a schematic flowchart of interaction between modules when a terminal copies one path of audio data to obtain N paths of audio data and performs concurrent encoding when generating an original video and a main-character video.

In FIG. 9A and FIG. 9B, the following example is used for description: The terminal generates the original video and the main-character video, that is, a stream configuration quantity N is equal to 2.

The terminal may process an audio signal collected by a microphone to obtain target audio data (denoted as first target audio data) corresponding to the original video, and process an audio signal collected by a microphone to obtain target audio data (denoted as second target audio data) corresponding to the main-character video.

In some possible cases, the first target audio data is different from the second target audio data. Sound information in the first target audio data may be sound information included in the audio signal collected by the microphone. Sound information in the second target audio data may be sound information obtained after focus tracking processing is performed on the audio signal collected by the microphone. In this case, sound information in a direction of a main character in the audio signal collected by the microphone is highlighted, and other sound information is suppressed.

Audio focus tracking processing may include: in a process of recording the main-character video, determining the direction of the main character, enhancing an audio signal in the direction of the main character in the audio signal collected by the microphone, and suppressing a sound signal in another direction, to obtain the second target audio data.

In some possible cases, the first target audio data corresponding to the original video may include two-channel audio data. One channel is marked as a left-channel audio signal 1, and the other channel is marked as a right-channel audio signal 1. The second target audio data corresponding to the main-character video may also include two-channel audio data. One channel is marked as a left-channel audio signal 2, and the other channel is marked as a right-channel audio signal 2. In this way, stereo can be implemented when the target audio data corresponding to the original video and the main-character video is played.

In order that the first target audio data corresponding to the original video is two-channel audio data and the second target audio data corresponding to the main-character video is dual-channel audio data, channel configuration needs to be performed before the microphone collects the audio signal. Herein, four channels are configured. In the four channels, two channels correspond to the original video, and the other two channels correspond to the main-character video.

After the microphone collects the audio signal, the terminal may copy the audio signal collected by the microphone to obtain two paths of audio signals. Then, the terminal performs audio mixing processing based on one path of audio signals to obtain a two-channel target audio signal 1 (corresponding to the original video), and performs focus tracking processing based on the other path of audio signals to obtain a two-channel target audio signal 2 (corresponding to the main-character video). When the four channels are configured, the target audio signal 1 and the target audio signal 2 are used to obtain four-channel audio data. For detailed content of the process, refer to the following description of step S311. Details are not described herein.

Subsequently, the terminal may obtain first audio data based on the four-channel audio data. The first audio data is copied to obtain two paths of second audio data. The two paths of second audio data are the same. Each path of second audio data includes the four-channel audio data. Then, the terminal may split one path of second audio data to obtain first channel audio data (left-channel audio data corresponding to the original video) and second channel audio data (right-channel audio data corresponding to the original video) and then obtain audio data corresponding to the original video; and encode the audio data corresponding to the original video to obtain target audio data (the first target audio data) corresponding to the original video. In addition, the terminal may split the other path of second audio data to obtain third channel audio data (left-channel audio data corresponding to the main-character video) and fourth channel audio data (right-channel audio data corresponding to the main-character video) and then obtain audio data corresponding to the main-character video; and encode the audio data corresponding to the main-character video to obtain a target audio signal (the second target audio data) corresponding to the main-character video.

In this process, for an interaction procedure of modules, refer to the following descriptions of step S301 to step S317.

S301: The terminal enters a main-character mode and detects an operation for a recording start control.

Step S301 is the same as the foregoing related step S201. For details, refer to the foregoing descriptions of step S201. Details are not described herein again.

S302: Obtain a stream configuration quantity N in the main-character mode.

Step S302 is the same as the foregoing related step S202. For details, refer to the foregoing descriptions of step S202. Details are not described herein again.

S303: The stream configuration quantity N in the main-character mode is sent to an audio recording management module.

Step S303 is the same as the foregoing related step S203. For details, refer to the foregoing descriptions of step S203. Details are not described herein again.

S304: The audio recording management module determines an audio copy quantity N based on the stream configuration quantity N.

Step S304 is the same as the foregoing related step S204. For details, refer to the foregoing descriptions of step S204. Details are not described herein again.

S305: The audio recording management module may configure channel information based on the video copy quantity N, and configure four channels when N is equal to 2.

The channel information may include a channel quantity and videos corresponding to different channels. For example, when N is equal to 2, the four channels are configured. It may be determined that two channels in the four channels correspond to the main-character video, and the other two channels correspond to the original video.

S306: The audio recording management module sends, to an audio framework layer, a first instruction for starting the microphone to collect the audio signal.

Step S306 is the same as the foregoing related step S205. For details, refer to the foregoing descriptions of step S205. Details are not described herein again.

S307: The audio framework layer determines M related microphones for collecting audio signals, and send, to an audio abstraction layer, the second instruction for starting the M microphones to collect the audio signals.

Step S307 is the same as the foregoing related step S206. For details, refer to the foregoing descriptions of step S206. Details are not described herein again.

S308: The audio abstraction layer starts the M microphones to collect the audio signals.

Step S308 is the same as the foregoing related step S207. For details, refer to the foregoing descriptions of step S207. Details are not described herein again.

S309: The M microphones collect the audio signals.

Step S309 is the same as the foregoing related step S208. For details, refer to the foregoing descriptions of step S208. Details are not described herein again.

S310: The M microphones send the collected audio signals to the audio abstraction layer.

Step S310 is the same as the foregoing related step S209. For details, refer to the foregoing descriptions of step S209. Details are not described herein again.

S311: The audio abstraction layer copies the audio signals to obtain two paths of audio signals. One path of audio signals are used to generate the target audio signal 1 corresponding to the original video, and the other path of audio signals are used to generate the target audio signal 2 corresponding to the main-character video. When the four channels are configured, the target audio signal 1 and the target audio signal 2 are used to obtain four-channel audio data, and then the first audio data is obtained based on the four-channel audio data. The first audio data includes the corresponding audio signals for generating the two videos and information about the audio signals.

The first audio data includes the corresponding audio signals for generating the two videos, that is, the four-channel audio data. The four-channel audio signal is obtained based on the audio signals collected by the M microphones. The first audio data further includes the information about the audio signals. The information about the audio signals may include a timestamp, a data length, a sampling rate, a data format, and the like. The timestamp indicates a time at which the M microphones collect the audio signals. The data length indicates a length of the four-channel audio signal included in the first audio data. The data format may indicate a format of the first audio data.

In some possible cases, step S311 may be specifically collaboratively completed by an audio input stream module and an audio algorithm module that are included at the audio abstraction layer.

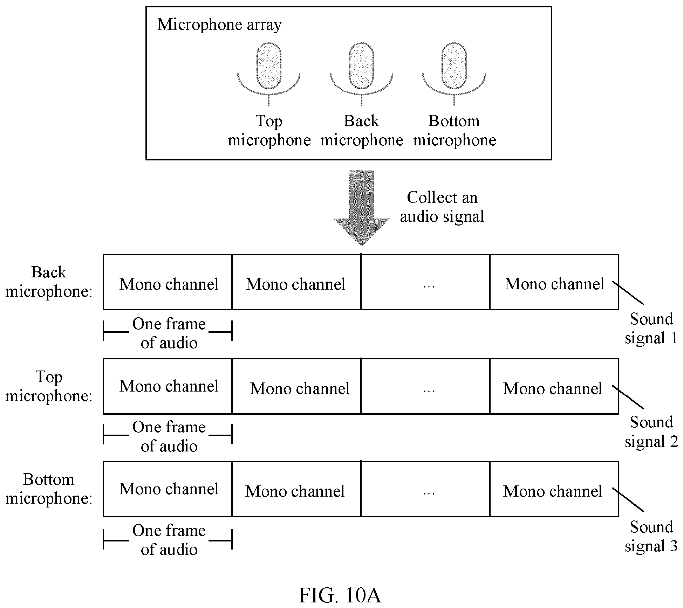

Based on FIG. 10A to FIG. 10D, the following provides an example description of a process in which the terminal obtains the first audio data based on the audio signals collected by the M microphones.

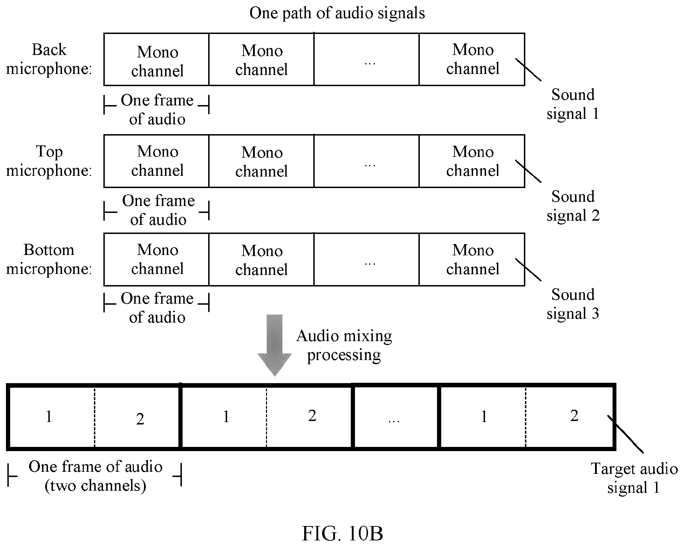

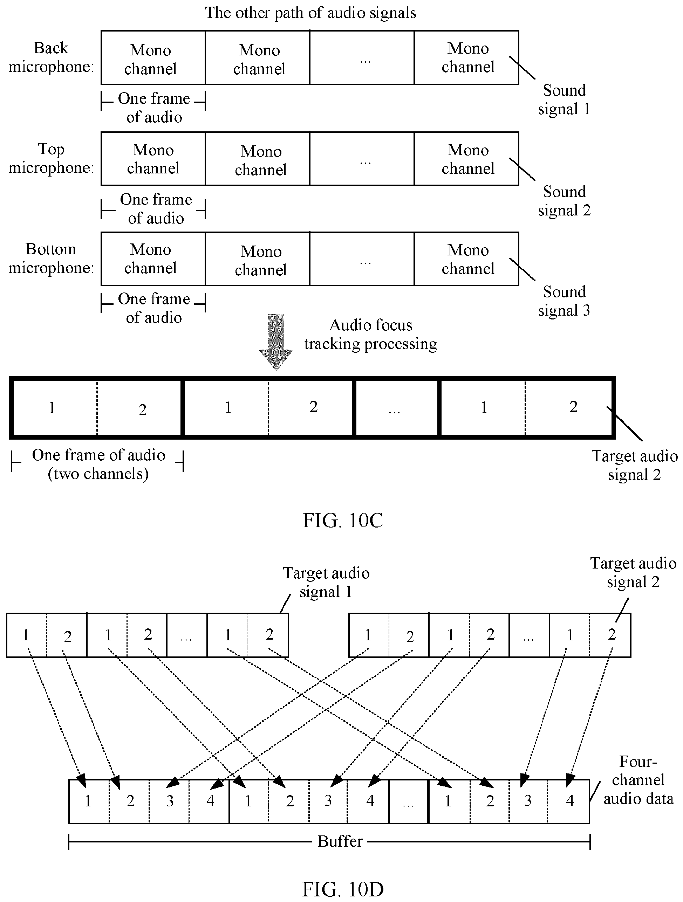

As shown in FIG. 10A, an example in which M is equal to 3 is used herein for description. The microphones for collecting the audio signals include a top microphone, a back microphone, and a bottom microphone. The audio signals collected by the three microphones may include: a mono-channel sound signal 1 collected by the back microphone, which means that each frame of audio of the sound signal 1 includes only mono-channel data; a mono-channel sound signal 2 collected by the top microphone, which means that each frame of audio of the sound signal 2 includes only mono-channel data; and a mono-channel sound signal 3 collected by the bottom microphone, which means that each frame of audio of the sound signal 3 includes only mono-channel data. Subsequently, the terminal may copy the audio signals collected by the three microphones to obtain two same paths of audio signals. Audio mixing processing is performed on one path of audio signals to obtain a target audio signal 1 corresponding to an original video. For this process, refer to the following descriptions of FIG. 10B. In addition, audio focus tracking processing is performed on the other path of audio signals to obtain a second audio signal corresponding to a main-character video. For this process, refer to the following descriptions of FIG. 10C.

The audio abstraction layer may perform audio mixing processing on one path of audio signals based on an audio mixing algorithm such as alignment audio mixing, direct adding, or adding and clamping, to obtain a two-channel target audio signal 1. As shown in FIG. 10B, one path of audio signals may include the sound signal 1 collected by the back microphone, the sound signal 2 collected by the top microphone, and the sound signal 3 collected by the bottom microphone. The audio abstraction layer may perform audio mixing processing on all the foregoing sound signals based on the audio mixing algorithm such as alignment audio mixing, direct adding, or adding and clamping, to obtain the two-channel target audio signal 1 (corresponding to the original video). In other words, each frame of audio of the target audio signal 1 includes two-channel audio data (referred to as left-channel audio data and right-channel audio data). In FIG. 10B, 1 represents the left-channel audio data corresponding to the original video, and 2 represents the right-channel audio data corresponding to the original video.

As shown in FIG. 10C, the other path of audio signals may include the sound signal 1 collected by the back microphone, the sound signal 2 collected by the top microphone, and the sound signal 3 collected by the bottom microphone. The audio abstraction layer may add, based on a beam program technology, a gain to a sound signal in a direction of the main character in the sound signal 1, to obtain an audio signal obtained after beamforming processing. In this way, the sound signal in the direction of the main character can be enhanced, and a sound signal in another direction can be suppressed. Then, based on ambient noise included in the sound signal 2 and the sound signal 3, the audio abstraction layer may filter, by using a noise suppression algorithm (for example, an anti-sound algorithm), the ambient noise from an audio signal obtained after beamforming processing, to obtain the target audio signal 2. Each frame of audio in the second audio signal includes two-channel audio data (referred to as left-channel audio data and right-channel audio data). In FIG. 10C, 1 represents the left-channel audio data corresponding to the main-character video, and 2 represents right-channel audio data corresponding to the main-character video.

Subsequently, when the four channels are configured, the audio abstraction layer may use the target audio signal 1 and the target audio signal 2 to obtain four-channel audio data.

As described in FIG. 10D, an example in which the four-channel audio data is in a buffer is used. In this example, the buffer may be configured with four channel regions. Herein, 1 represents a channel region 1, 2 represents a channel region 2, 3 represents a channel region 3, and 4 represents a channel region 4. The channel region 1 is used to record left-channel audio data in the original video, the channel region 2 is used to record right-channel audio data in the original video, the channel region 3 is used to record left-channel audio data in the main-character video, and the channel region 4 is used to record right-channel audio data in the main-character video. A manner in which the audio abstraction layer obtains the four-channel audio data includes: filling the left-channel audio data in the target audio signal 1 into the channel region 1, filling the right-channel audio data in the target audio signal 1 into the channel region 2, filling the left-channel audio data in the target audio signal 2 into the channel region 3, and filling the right-channel audio data in the target audio signal 2 into the channel region 4. A manner of arranging the four-channel audio data in FIG. 10D has the following functions: When a frame loss case occurs in the buffer, data lost by the target audio signal 1 and the target audio signal 2 may be reduced, and data integrity of the target audio signal 1 and the target audio signal 2 is maximumly ensured.

Subsequently, the audio abstraction layer may use the four-channel audio data as an audio signal in the first audio data. In addition to the four-channel audio data, the first audio data may further include information about the audio signal. For the information about the audio signal, refer to the foregoing description. Details are herein again.

S312: The audio abstraction layer sends the first audio data to the audio framework layer.

Step S312 is the same as the foregoing related step S211. For details, refer to the foregoing descriptions of step S211. Details are not described herein again.

S313: The audio framework layer sends the first audio data to the audio recording management module.

Step S313 is the same as the foregoing related step S212. For details, refer to the foregoing descriptions of step S212. Details are not described herein again.

S314: The audio recording management module copies the first audio data based on the audio copy quantity N to obtain two paths of second audio data. The two paths of second audio data include the audio signals corresponding to the two videos and partial information of the audio signals.

The two paths of second audio data are the same audio data.

The second audio data includes the audio signals corresponding to generation of the two videos, that is, the four-channel audio data.

Generally, the second audio data may include a part of content in the first audio data. The part of content can be used to generate a video. Other content that cannot be used to generate a video may not be copied herein.

In some instances, the audio recording management module may copy the four-channel audio signal and the partial information (for example, including a timestamp and a data length) in the first audio data to obtain the two same paths of second audio data. In other words, any path of second audio data includes the four-channel audio signal and the partial information, such as the timestamp and the data length.

The timestamp may be used to match a timestamp of an image. Stream mixing can be performed on only an audio signal and an image having the same timestamp after encoding, to generate a video.

S315: The audio recording management module sends the two paths of second audio data to an encoder control module.

Step S315 is the same as the foregoing related step S214. For details, refer to the foregoing descriptions of step S214. Details are not described herein again. In this case, N is changed to 2.

S316: The encoder control module splits one path of second audio data to obtain audio data corresponding to the main-character video, and splits the other path of second audio data to obtain audio data corresponding to the original video.

The encoder control module may split the four-channel audio data included in the path of audio data to obtain the audio data corresponding to the main-character video, and split the four-channel audio data included in the other path of audio data to obtain the audio data corresponding to the original video. Subsequently, the encoder control module may instruct an audio encoder to encode the audio data corresponding to the original video and the audio data corresponding to the main-character video, so that the audio encoder can perform the following step S317.

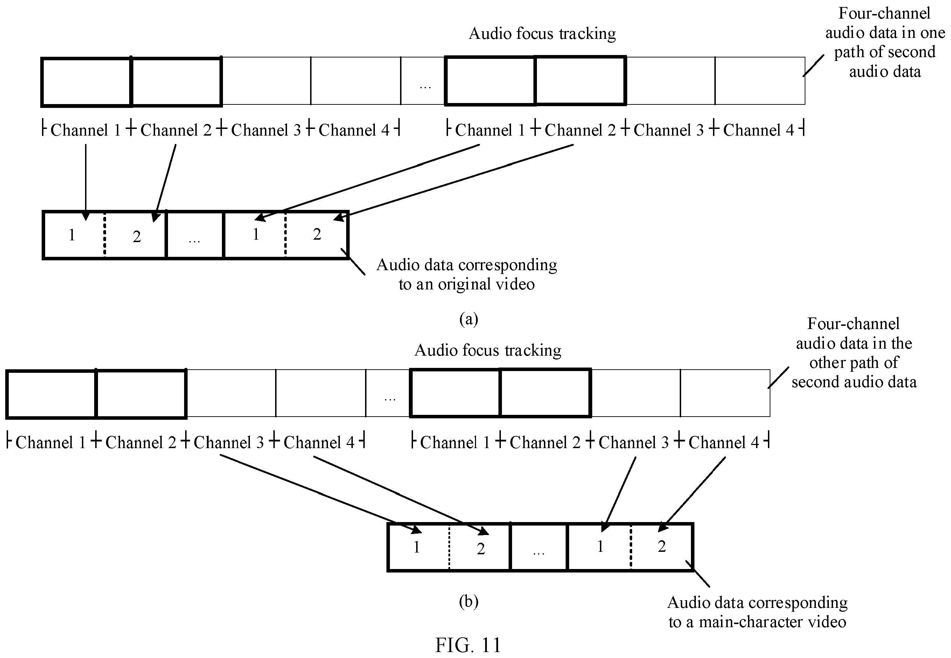

FIG. 11 is a schematic diagram of splitting two paths of second audio data to obtain audio data corresponding to a main-character video and splitting the other path of second audio data to obtain audio data corresponding to an original video.

As shown in FIG. 11, a channel 1 represents a left-channel audio signal corresponding to the original video, a channel 2 represents a right-channel audio signal corresponding to the original video, a channel 3 represents a left-channel audio signal corresponding to the main-character video, and a channel 4 represents a right-channel audio signal corresponding to the main-character video.

As shown in (a) in FIG. 11, four-channel audio data included in the path of second audio data is split to obtain the audio data of two channels: the channel 1 and the channel 2, that is, obtain the audio data corresponding to the original video.

As shown in (b) in FIG. 11, four-channel audio data included in the other path of second audio data is split to obtain the audio data of two channels: the channel 3 and the channel 4, that is, obtain the audio data corresponding to the main-character video.

S317: The audio encoder encodes the audio data corresponding to the main-character video and the audio data corresponding to the original video.

The audio encoder may encode the audio data corresponding to the main-character video to obtain encoded audio data (which may be referred to as first target audio data), and encode the audio data corresponding to the original video to obtain encoded audio data (which may be referred to as second target audio data).

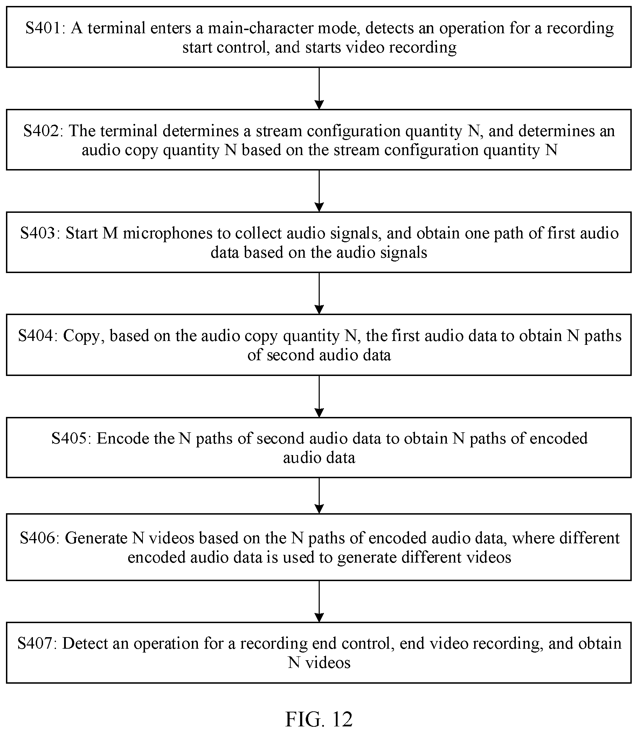

FIG. 12 is a schematic flowchart in which a terminal copies one path of audio data to obtain N paths of audio data and performs concurrent encoding to generate N videos.

With reference to FIG. 12, the following describes in detail a detailed process in which a terminal copies first audio data in a video recording process to obtain N paths of second audio data and concurrently encodes the N paths of second audio data to generate the N videos.

For detailed description of this process, refer to the following descriptions of step S401 to step S407.

S401: The terminal enters a main-character mode, detects an operation for a recording start control, and starts video recording.

As shown on the interface in FIG. 2C, when detecting an operation (for example, a tapping operation) for a main-character mode control, the terminal determines to enter the main-character mode.

After detecting the operation for the recording start control, the terminal starts video recording.

In some instances, after the terminal determines to enter the main-character mode, before the terminal detects the operation for the recording start control, a main character is determined. When the operation for the recording start control is detected, the terminal may simultaneously start recording of an original video and a main-character video in response to the operation. For example, as shown in FIG. 4A, when detecting the operation (for example, a tapping operation) for the recording start control, the terminal may start recording of the original video and the main-character video.

In some other embodiments, after the terminal determines to enter the main-character mode, before the terminal detects the operation for the recording start control, a main character is not determined. When the operation for the recording start control is detected, in response to the operation, the terminal may start recording of an original video but does not record a main-character video. For example, as shown in a and b in FIG. 4B, when detecting the operation (for example, a tapping operation) for the recording start control, the terminal may start recording of the original video but does not record the main-character video.

It should be understood that, in step S401, the terminal may enter the main-character mode by using the main-character mode control, and may alternatively enter the main-character mode in another manner, for example, set the main-character mode as a shooting mode option. The terminal may select the main-character mode after opening a camera application.

S402: The terminal determines a stream configuration quantity N, and determines an audio copy quantity N based on the stream configuration quantity N.

After the terminal starts video recording, the terminal may determine the stream configuration quantity N. The audio copy quantity N is equal to the stream configuration quantity N.

If the video recorded by the terminal includes only the original video and does not include the main-character video, the stream configuration quantity N is equal to 1. If the video recorded by the terminal includes both the original video and the main-character video, the stream configuration quantity N is equal to 2.

In another possible case, the terminal may alternatively generate more videos in a recording process. In this case, N may be greater than or equal to 3.

An occasion in which the terminal is triggered to determine the stream configuration quantity N includes but is not limited to the following occasion.
(1) The operation for the recording start control is detected. In response to the operation, the terminal starts video recording, and the terminal may determine the stream configuration quantity N. After the terminal starts video recording, the terminal may newly determine the stream configuration quantity N in the following cases, including:
   Case 1: When detecting an operation of determining the main character, the terminal may newly determine the stream configuration quantity N to update the stream configuration quantity N.
   Case 2: When the main character is lost, the terminal may newly determine the stream configuration quantity N to update the stream configuration quantity N.
   Case 3: When detecting an operation of stopping recording of the main-character video, for example, an operation for a small-window recording end control, the terminal may newly determine the stream configuration quantity N to update the stream configuration quantity N.
(2) After the terminal starts video recording, the terminal may determine the stream configuration quantity N according to a specific time frequency.

S403: Start M microphones to collect audio signals, and obtain one path of first audio data based on the audio signals.

After detecting the operation for the recording start control, the terminal may start the M microphones to collect the audio signals.

The terminal may enable some or all of microphones to collect audio signals. The terminal has S microphones. The M microphones are selected to collect the audio signals. Herein, M is an integer greater than or equal to 1, and S is an integer greater than or equal to M.

For descriptions of the first audio data, refer to the foregoing related content. Details are not described herein again.

S404: Copy, based on the audio copy quantity N, the first audio data to obtain N paths of second audio data.

The N paths of second audio data are the same audio data.

Generally, the second audio data may include a part of content in the first audio data. The part of content can be used to generate a video. Other content that cannot be used to generate a video may not be copied herein.

In some instances, the terminal may copy an audio signal in the first audio data, a timestamp of the audio signal, and a data length of the audio signal to obtain the N same paths of second audio data. One path of second audio data includes the audio signal in the first audio data, the timestamp of the audio signal, and the data length of the audio signal.

For related descriptions of the audio signal information, refer to the foregoing content. Details are not described herein again.

In some instances, the terminal can copy the first audio data only when it is determined that the first audio data is correct. A manner of determining that the first audio data is correct includes: determining that a data length of an audio signal included in the first audio data is equal to a minimum data length. The minimum data length is determined based on parameters such as the foregoing related sampling rate and data format.

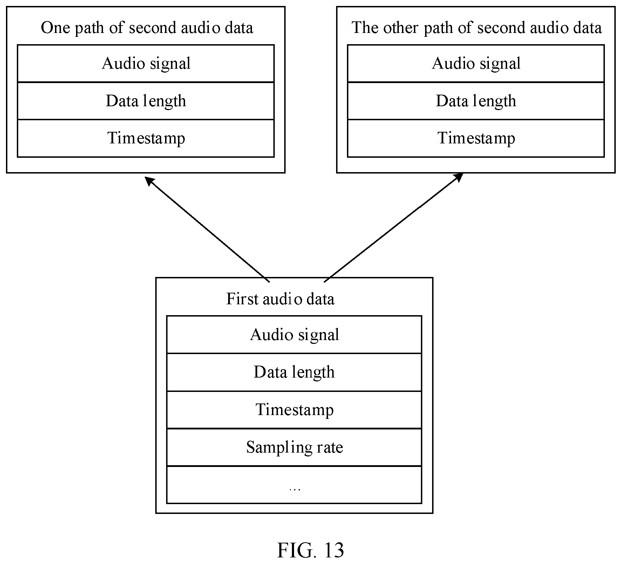

For example, FIG. 13 is a schematic diagram in which a terminal copies first audio data to obtain two paths of second audio data.

As shown in FIG. 13, the first audio data includes an audio signal and information about the audio signal, for example, a data length, a timestamp, and a sampling rate. The terminal copies the first audio data to obtain the two paths of second audio data. One path of second audio data may include the audio signal and the information about the audio signal, for example, the data length and the timestamp.

In some other instances, in addition to the audio signal in the first audio data, the timestamp of the audio signal, and the data length of the audio signal, the second audio data may further include a data format. The data format may indicate a format (audiodata) of the second audio data. A format (audiodata) of a second path of audio data may be: {buffer, buffersize, pts}. Herein, buffer represents the audio signal and may be in an array form, buffersize represents the data length of the audio signal, and pts represents the timestamp of the audio signal.

The timestamp of the audio signal may be used to match a timestamp of an image. Stream mixing can be performed on only an audio signal and an image having the same timestamp after encoding, to generate a video.

The data length of the audio signal may be used for a test in the following step S405. A function of the test is to determine validity of the second audio data. In step S405, valid second audio data may be encoded, and invalid second audio data may be not encoded.

S405: Encode the N paths of second audio data to obtain N paths of encoded audio data.

The terminal may concurrently encode the N paths of second audio data to obtain the N paths of encoded audio data.

In some instances, before determining to encode one path of second audio data, the terminal first determines whether the data length included in the second audio data is greater than 0.

When the data length included in the second audio data is greater than 0, the terminal determines that the second audio data is valid, and encodes the second audio data to obtain one path of encoded audio data.

When the data length included in the second audio data is equal to 0, the terminal determines that the second audio data is invalid, and may not encode the second audio data.

S406: Generate the N videos based on the N paths of encoded audio data. Different encoded audio data is used to generate different videos.

For example, when the original video and the main-character video are generated (N=2), the terminal may generate the original video based on one path of encoded audio data (first target audio data), and generate the main-character video based on the other path of encoded data (second target audio data).

A process of generating the original video includes that the terminal encodes an original image to obtain an encoded original image. When the terminal determines that the timestamp of the audio signal included in the first target audio data is the same as a timestamp of the original image, the terminal may perform stream mixing based on the first target audio data and the encoded original image to generate the original video.

A process of generating the original video includes that the terminal encodes a main-character image to obtain an encoded main-character image. When the terminal determines that the timestamp of the audio signal included in the second target audio data is the same as the timestamp of the original image, the terminal may perform stream mixing based on the second target audio data and the encoded main-character image to generate the main-character video.

S407: Detect an operation for a recording end control, end video recording, and obtain the N videos.

The terminal may obtain the N videos in a recording process, and may view the N videos. For example, the original video and the main-character video may be obtained in the recording process. With reference to the foregoing related FIG. 5B, FIG. 5B shows an example interface for displaying the original video and the main-character video.

In this embodiment of this application, a large window may be referred to as a first preview window, a small window may be referred to as a second preview window, the main-character mode control may be referred to as a second control, the main-character mode may be referred to as a first mode, a recording end control may be referred to as a first control, the audio signal included in the first audio data may be referred to as a first audio signal, and the information about the audio signal included in the first audio data may be referred to as information about the first audio signal.

An example terminal provided in an embodiment of this application is described below.

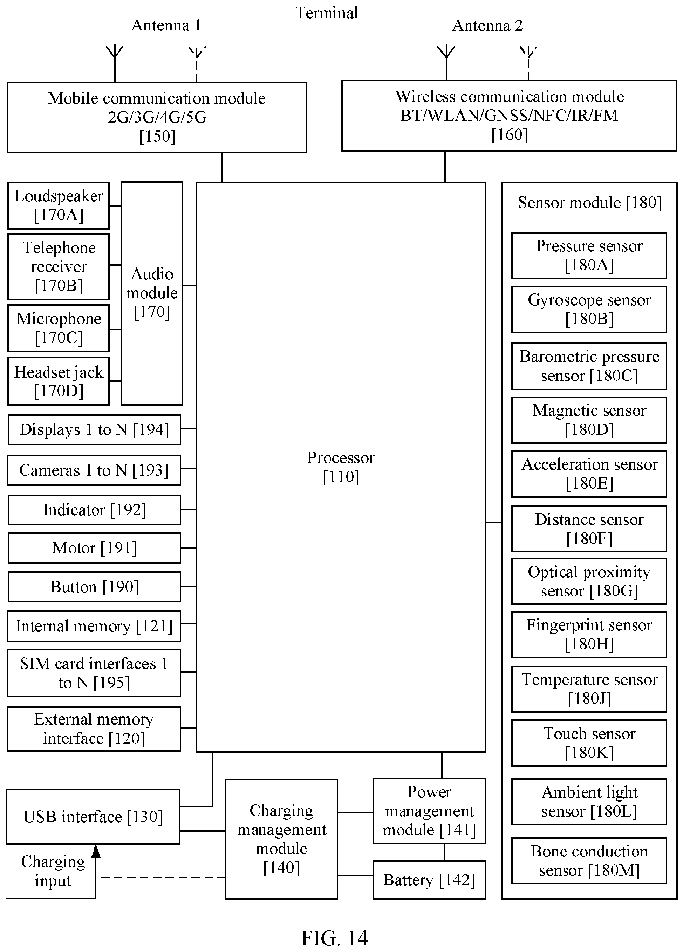

FIG. 14 is a schematic diagram of a structure of a terminal according to an embodiment of this application.

This embodiment is described below in detail by using the terminal as an example. It should be understood that the terminal may have more or fewer components than those shown in FIG. 14, may combine two or more components, or may have different component configurations. Various parts shown in FIG. 14 may be implemented in hardware, software, or a combination of hardware and software including one or more signal processing and/or application-specific integrated circuits.

The terminal may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a loudspeaker 170A, a telephone receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of this application does not constitute a specific limitation on the terminal. In some other embodiments of this application, the terminal may include more or fewer components than those shown in the figure, combine some components, split some components, or have different component arrangements. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be separate devices, or may be integrated into one or more processors.

The controller may be a nerve center and a command center of the terminal. The controller may generate an operation control signal based on instruction operation code and a time sequence signal to complete control of instruction fetching and instruction execution.

The processor 110 may be further provided with a memory configured to store instructions and data. In some embodiments, the memory in the processor 110 is a cache. The memory may store instructions or data recently used or cyclically used by the processor 110. If the processor 110 needs to use the instructions or the data again, the processor may directly invoke the instructions or the data from the memory. This avoids repeated access, and reduces a waiting time of the processor 110, thereby improving system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, and the like.

It may be understood that an interface connection relationship between the modules illustrated in this embodiment of this application is merely an example for description, and does not constitute a limitation on the structure of the terminal. In some other embodiments of this application, the terminal may use an interface connection manner different from that in the foregoing embodiments or a combination of a plurality of interface connection manners.

The charging management module 140 is configured to receive charging input from the charger.

The power management module 141 is configured to connect to the battery 142, the charging management module 140, and the processor 110.

A wireless communication function of the terminal may be implemented by using the antenna 1, the antenna 2, the mobile communication module 150, the wireless communication module 160, the modem processor, a baseband processor, and the like.

The antenna 1 and the antenna 2 are configured to transmit and receive electromagnetic wave signals. Each antenna in the terminal may be configured to cover one or more communication frequency bands. Different antennas may be multiplexed to improve utilization of the antennas. For example, the antenna 1 may be multiplexed as a diversity antenna in a wireless local area network. In some other embodiments, the antennas may be used with a tuning switch.

The mobile communication module 150 may provide a wireless communication solution that is applied to the terminal and that includes 2G/3G/4G/5G and the like. The mobile communication module 150 may include at least one filter, a switch, a power amplifier, a low noise amplifier (low noise amplifier, LNA), and the like.

The modem processor may include a modulator and a demodulator.

The wireless communication module 160 may provide a solution for wireless communication to be applied to the terminal, including a wireless local area network (wireless local area networks, WLAN) (such as a wireless fidelity (wireless fidelity, Wi-Fi) network), Bluetooth (bluetooth, BT), and the like.

The terminal implements a display function by using the GPU, the display 194, the application processor, and the like. The GPU is a microprocessor for image processing and is connected to the display 194 and the application processor. The GPU is configured to perform mathematical and geometric calculation and graphics rendering. The processor 110 may include one or more GPUs that execute program instructions to generate or change display information.

The display 194 is configured to display an image, a video, and the like.

The terminal may implement a photographing function by using the ISP, the camera 193, a video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may also perform algorithm optimization on noise, brightness, and color of an image. The ISP may further optimize parameters such as exposure and a color temperature of a photographing scene. In some embodiments, the ISP may be disposed in the camera 193.

The camera 193 is configured to capture a still image or a video. An optical image of an object is generated through a lens and is projected onto a photosensitive element. The photosensitive element may be a charge-coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the terminal may include one or N cameras 193, where N is a positive integer greater than 1.

The digital signal processor is configured to process a digital signal. In addition to a digital image signal, the digital signal processor may further process another digital signal. For example, when the terminal selects a frequency, the digital signal processor is configured to perform Fourier transform and the like on energy of the frequency.

The video codec is configured to compress or decompress a digital video. The terminal may support one or more types of video codecs. In this way, the terminal may play or record videos in a plurality of encoding formats, for example, moving picture experts group (moving picture experts group, MPEG)1, MPEG2, MPEG3, and MPEG4.

The NPU is a neural-network (neural-network, NN) computing processor, quickly processes input information by referring to a structure of a biological neural network, for example, by referring to a mode of transfer between neurons in human brain, and may further continuously perform self-learning. Applications such as intelligent cognition of the terminal, such as image recognition, facial recognition, speech recognition, and text understanding, may be implemented by using the NPU.

The internal memory 121 may include one or more random access memories (random access memory, RAM) and one or more non-volatile memories (non-volatile memory, NVM).

The random access memory may include a static random-access memory (static random-access memory, SRAM), a dynamic random access memory (dynamic random access memory, DRAM), and the like.

The non-volatile memory may include a magnetic disk storage device and a flash memory (flash memory).

The flash memory may include a NOR FLASH, a NAND FLASH, a 3D NAND FLASH, and the like according to an operation principle, and may include a single-level cell (single-level cell, SLC), a multi-level cell (multi-level cell, MLC), and the like based on a cell potential level.

The random access memory may be directly read and written by the processor 110, may be configured to store an executable program (for example, machine instructions) of an operating system or another running program, or may be configured to store data of a user and an application.

The non-volatile memory may also store the executable program, the data of the user, the data of the application, and the like, which may be loaded into the random access memory in advance for directly reading and writing by the processor 110.

The external memory interface 120 may be configured to connect to an external non-volatile memory, to expand a storage capability of the terminal.

The terminal may implement an audio function, for example, music playing and recording, by using the audio module 170, the loudspeaker 170A, the telephone receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode the audio signal. In some embodiments, the audio module 170 may be disposed in the processor 110, or some functional modules in the audio module 170 are disposed in the processor 110.

The loudspeaker 170A, also referred to as a "horn", is configured to convert an electrical audio signal into a sound signal.

The telephone receiver 170B, also referred to as an "earpiece", is configured to convert an audio electrical signal into a sound signal.

The microphone 170C, also referred to as a "voice tube" or a "mike", is configured to convert a sound signal into an electrical signal.

The touch sensor 180K is also referred to as a "touch panel". The touch sensor 180K may be disposed on the display 194. The touch sensor 180K and the display 194 constitute a touchscreen, which is also referred to as a "touch screen".

The button 190 includes a power button, a volume button, and the like. The button 190 may be a mechanical button.

In this embodiment of this application, the processor 110 may invoke the computer instructions stored in the internal memory 121 to enable the terminal to perform the video processing method in embodiments of this application.

The foregoing embodiments are merely intended to describe the technical solutions in this application, but are not intended to limit this application.

As used in the foregoing embodiments, a term "when ..." may be interpreted as "if ...", "after ... ", "in response to it is determined that ...", or "in response to it is detected that ...", depending on the context. Similarly, according to the context, the phrase "when it is determined that" or "if (a stated condition or event) is detected" may be interpreted as a meaning of "if it is determined that" or "in response to determining" or "when (a stated condition or event) is detected" or "in response to detecting (a stated condition or event)".

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, all or some procedures or functions in embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device integrating one or more usable media, for example, a server or a data center. The usable medium may be a magnetic medium (for example, a floppy disk, a hard disk, or a magnetic tape), an optical medium (for example, a DVD), a semiconductor medium (for example, a solid-state drive), or the like.

Persons of ordinary skill in the art may understand that all or some of the procedures in the methods in the foregoing embodiments may be implemented by using a computer program instructing related hardware. The program may be stored in a computer-readable storage medium. When the program is executed, the procedures in the foregoing method embodiments may be performed. The foregoing storage medium includes various media that can store program code, such as a ROM, a random access memory RAM, a magnetic disk, or an optical disc.

## Claims

1. A video processing method, applied to a terminal, wherein the terminal comprises a camera, and the method comprises:
displaying a recording interface, wherein the recording interface comprises a first control (314), a first preview window (301), and a second preview window (302), and the first preview window (301) is used to display an image captured by the camera;
displaying a first image in the first preview window (301) at a first moment, wherein the first image is captured by the camera at the first moment;
when it is detected that a first object is in a first position of the first image, displaying, by the terminal, a second image in the second preview window (302), wherein the second image is generated by cutting a partial image from the first image, and the second image comprises the first object;
displaying a third image in the first preview window (301) at a second moment, wherein the third image is captured by the camera at the second moment;
when it is detected that the first object is in a second position of the third image, displaying, by the terminal, a fourth image in the second preview window (302), wherein the fourth image is generated based on the third image, and the fourth image comprises the first object;
obtaining first audio data, wherein the first audio data comprises a first audio signal and information about the first audio signal, and the first audio signal is an audio signal generated based on an audio signal collected at the first moment; and
detecting a first operation for the first control (314), stopping video recording in response to the first operation, and saving a first video recorded based on an image displayed in the first preview window (301) and a second video recorded based on an image displayed in the second preview window (302), wherein
the first video comprises the first image and first target audio data, the second video comprises the second image and second target audio data, and both the first target audio data and the second target audio data are simultaneously encoded by performing real-time processing on the first audio data by copying one path of the first audio data to obtain two paths of second audio data, and then the two paths of second audio data are simultaneously encoded to obtain an audio stream of the second target audio data corresponding to the second video and an audio stream of the first target audio data related to the first video.

2. The method according to claim 1, wherein before the displaying a recording interface, the method further comprises:
displaying the preview interface, wherein the preview interface comprises a second control;
detecting a second operation for the second control, so that a camera application enters a first mode in response to the second operation;
when the first image is displayed in the first preview window, detecting a third operation for the first object; and
displaying a second preview window in response to the third operation.

3. The method according to claim 1 or 2, wherein after the obtaining first audio data, before the stopping video recording, the method further comprises:
determining, by the terminal, a stream configuration quantity N;
copying the first audio data to obtain N same paths of second audio data based on the stream configuration quantity N, wherein any path of second audio data comprises the first audio signal and partial information of the first audio signal; and
obtaining the first target audio data based on one path of second audio data, and obtaining the second target audio data based on another path of second audio data.

4. The method according to claim 3, wherein the obtaining the first target audio data based on one path of second audio data, and obtaining the second target audio data based on another path of second audio data specifically comprises:
encoding, by the terminal, one path of second audio data and another path of second audio data to obtain two paths of encoded audio data, wherein one path of encoded audio data is used as the first target audio data, and the other path of encoded audio data is used as the second target audio data.

5. The method according to claim 3 or 4, wherein the determining, by the terminal, a stream configuration quantity N specifically comprises:
detecting, by the terminal, the second operation for the second control, and determining, by the terminal, the stream configuration quantity N in response to the operation;
after the recording interface is displayed, detecting an operation for the first object; and
updating, by the terminal, the stream configuration quantity N in response to the operation for the first object.

6. The method according to claim 3 or 4, wherein the determining, by the terminal, a stream configuration quantity N specifically comprises:
detecting, by the terminal, the second operation for the second control, and determining, by the terminal, the stream configuration quantity N in response to the operation;
after the recording interface is displayed, detecting an operation for stopping recording the second video; and
updating, by the terminal, the stream configuration quantity N in response to the operation for stopping recording the second video.

7. The method according to claim 4, wherein the terminal comprises a first audio encoding module and a second audio encoding module, and the encoding, by the terminal, one path of second audio data and another path of second audio data specifically comprises:
encoding, by the first audio encoding module, the path of second audio data, and encoding, by the second audio encoding module, the another path of second audio data.

8. The method according to any one of claims 1 to 7, wherein
the first audio data comprises the first audio signal and a timestamp, a data length, a sampling rate, and a data format of the first audio signal.

9. The method according to any one of claims 2 to 7, wherein
the second audio data comprises the first audio signal and a timestamp and a data length of the first audio signal.

10. An electronic device, comprising:
one or more processors;
one or more memories; and
a module at which a plurality of applications are installed, wherein
the memory stores one or more programs, and when the one or more programs are executed by the processor, the electronic device is enabled to perform the following steps:
displaying a recording interface, wherein the recording interface comprises a first control (314), a first preview window (301), and a second preview window (302), and the first preview window (301) is used to display an image captured by the camera;
displaying a first image in the first preview window (301) at a first moment, wherein the first image is captured by the camera at the first moment;
when it is detected that a first object is in a first position of the first image, displaying, by the terminal, a second image in the second preview window (302), wherein the second image is generated by cutting a partial image from the first image, and the second image comprises the first object;
displaying a third image in the first preview window (301) at a second moment, wherein the third image is captured by the camera at the second moment;
when it is detected that the first object is in a second position of the third image, displaying, by the terminal, a fourth image in the second preview window, wherein the fourth image is generated based on the third image, and the fourth image comprises the first object;
obtaining first audio data, wherein the first audio data comprises a first audio signal and information about the first audio signal, and the first audio signal is an audio signal generated based on an audio signal collected at the first moment; and
detecting a first operation for the first control (314), stopping video recording in response to the first operation, and saving a first video recorded based on an image displayed in the first preview window (301) and a second video recorded based on an image displayed in the second preview window (302), wherein
the first video comprises the first image and first target audio data, the second video comprises the second image and second target audio data, and both the first target audio data and the second target audio data are simultaneously encoded by performing real-time processing on the first audio data by copying one path of the first audio data to obtain two paths of second audio data, and then the two paths of second audio data are simultaneously encoded to obtain an audio stream of the second target audio data corresponding to the second video and an audio stream of the first target audio data related to the first video.

11. A computer storage medium, comprising a computer program, which when executed by a processor, cause the processor to perform operations comprising:
displaying a recording interface, wherein the recording interface comprises a first control (314), a first preview window (301), and a second preview window (302), and the first preview window (301) is used to display an image captured by the camera;
displaying a first image in the first preview window (301) at a first moment, wherein the first image is captured by the camera at the first moment;
when it is detected that a first object is in a first position of the first image, displaying, by the terminal, a second image in the second preview window (302), wherein the second image is generated by cutting a partial image from the first image, and the second image comprises the first object;
displaying a third image in the first preview window (301) at a second moment, wherein the third image is captured by the camera at the second moment;
when it is detected that the first object is in a second position of the third image, displaying, by the terminal, a fourth image in the second preview window (302), wherein the fourth image is generated based on the third image, and the fourth image comprises the first object;
obtaining first audio data, wherein the first audio data comprises a first audio signal and information about the first audio signal, and the first audio signal is an audio signal generated based on an audio signal collected at the first moment; and
detecting a first operation for the first control (314), stopping video recording in response to the first operation, and saving a first video recorded based on an image displayed in the first preview window (301) and a second video recorded based on an image displayed in the second preview window (302), wherein
the first video comprises the first image and first target audio data, the second video comprises the second image and second target audio data, and both the first target audio data and the second target audio data are simultaneously encoded by performing real-time processing on the first audio data by copying one path of the first audio data to obtain two paths of second audio data, and then the two paths of second audio data are simultaneously encoded to obtain an audio stream of the second target audio data corresponding to the second video and an audio stream of the first target audio data related to the first video.

## Patentansprüche

1. Videoverarbeitungsverfahren, das auf einem Endgerät angewendet wird, wobei das Endgerät eine Kamera umfasst und das Verfahren Folgendes umfasst:
Anzeigen einer Aufzeichnungsoberfläche, wobei die Aufzeichnungsoberfläche ein erstes Steuerelement (314), ein erstes Vorschaufenster (301) und ein zweites Vorschaufenster (302) umfasst und das erste Vorschaufenster (301) dazu dient, ein von der Kamera aufgenommenes Bild anzuzeigen;
Anzeigen eines ersten Bildes im ersten Vorschaufenster (301) zu einem ersten Zeitpunkt, wobei das erste Bild zu dem ersten Zeitpunkt von der Kamera aufgenommen wurde;
wenn erkannt wird, dass sich ein erstes Objekt an einer ersten Position des ersten Bildes befindet, Anzeigen, durch das Endgerät, eines zweiten Bildes im zweiten Vorschaufenster (302), wobei das zweite Bild durch Zuschneiden eines Teilbildes aus dem ersten Bild erzeugt wird und das zweite Bild das erste Objekt umfasst;
Anzeigen eines dritten Bildes im ersten Vorschaufenster (301) zu einem zweiten Zeitpunkt, wobei das dritte Bild zu dem zweiten Zeitpunkt von der Kamera aufgenommen wurde;
wenn erkannt wird, dass sich das erste Objekt an einer zweiten Position des dritten Bildes befindet, Anzeigen, durch das Endgerät, eines vierten Bildes im zweiten Vorschaufenster (302), wobei das vierte Bild basierend auf dem dritten Bild erzeugt wird und das vierte Bild das erste Objekt umfasst;
Erlangen erster Audiodaten, wobei die ersten Audiodaten ein erstes Audiosignal und Informationen über das erste Audiosignal umfassen und das erste Audiosignal ein Audiosignal ist, das basierend auf einem zu dem ersten Zeitpunkt gesammelten Audiosignal erzeugt wurde; und
Erkennen einer ersten Bedienung für das erste Steuerelement (314), Stoppen der Videoaufzeichnung als Reaktion auf die erste Bedienung und Speichern eines ersten Videos, das basierend auf einem im ersten Vorschaufenster (301) angezeigten Bild aufgezeichnet wurde, und eines zweiten Videos, das basierend auf einem im zweiten Vorschaufenster (302) angezeigten Bild aufgezeichnet wurde, wobei
das erste Video das erste Bild und erste Zielaudiodaten umfasst, das zweite Video das zweite Bild und zweite Zielaudiodaten umfasst, und sowohl die ersten Zielaudiodaten als auch die zweiten Zielaudiodaten gleichzeitig durch Echtzeitverarbeitung der ersten Audiodaten kodiert werden, indem ein Pfad der ersten Audiodaten kopiert wird, um zwei Pfade von zweiten Audiodaten zu erhalten, und dann die zwei Pfade von zweiten Audiodaten gleichzeitig kodiert werden, um einen Audiostream der zweiten Zielaudiodaten entsprechend dem zweiten Video und einen Audiostream der ersten Zielaudiodaten in Bezug auf das erste Video zu erhalten.

2. Verfahren nach Anspruch 1, wobei vor dem Anzeigen einer Aufzeichnungsoberfläche das Verfahren ferner umfasst:
Anzeigen der Vorschauoberfläche, wobei die Vorschauoberfläche ein zweites Steuerelement umfasst;
Erkennen einer zweiten Operation für das zweite Bedienelement, sodass eine Kameraanwendung als Reaktion auf die zweite Operation in einen ersten Modus wechselt;
wenn das erste Bild im ersten Vorschaufenster angezeigt wird, Erkennen einer dritten Operation für das erste Objekt; und
Anzeigen eines zweiten Vorschaufensters als Reaktion auf die dritte Operation.

3. Verfahren nach Anspruch 1 oder 2, wobei nach dem Erhalten der ersten Audiodaten und vor dem Stoppen der Videoaufnahme das Verfahren ferner umfasst:
Bestimmen einer Stream-Konfigurationsmenge N durch das Endgerät;
Kopieren der ersten Audiodaten, um basierend auf der Stream-Konfigurationsmenge N N gleiche Pfade zweiter Audiodaten zu erhalten, wobei jeder Pfad zweiter Audiodaten das erste Audiosignal und Teilinformationen des ersten Audiosignals umfasst; und
Erhalten der ersten Ziel-Audiodaten basierend auf einem Pfad zweiter Audiodaten und Erhalten der zweiten Ziel-Audiodaten basierend auf einem anderen Pfad zweiter Audiodaten.

4. Verfahren nach Anspruch 3, wobei das Erhalten der ersten Ziel-Audiodaten basierend auf einem Pfad zweiter Audiodaten und das Erhalten der zweiten Ziel-Audiodaten basierend auf einem anderen Pfad zweiter Audiodaten insbesondere umfasst:
Kodieren eines Pfades zweiter Audiodaten und eines anderen Pfades zweiter Audiodaten durch das Endgerät, um zwei Pfade kodierter Audiodaten zu erhalten, wobei ein Pfad kodierter Audiodaten als die ersten Ziel-Audiodaten verwendet wird und der andere Pfad kodierter Audiodaten als die zweiten Ziel-Audiodaten verwendet wird.

5. Verfahren nach Anspruch 3 oder 4, wobei das Bestimmen einer Stream-Konfigurationsmenge N durch das Endgerät insbesondere umfasst:
Erkennen der zweiten Operation für das zweite Bedienelement durch das Endgerät und Bestimmen der Stream-Konfigurationsmenge N durch das Endgerät als Reaktion auf die Operation;
nachdem die Aufnahmeschnittstelle angezeigt wurde, Erkennen einer Operation für das erste Objekt; und
Aktualisieren der Stream-Konfigurationsmenge N durch das Endgerät als Reaktion auf die Operation für das erste Objekt.

6. Verfahren nach Anspruch 3 oder 4, wobei das Bestimmen einer Stream-Konfigurationsmenge N durch das Endgerät insbesondere umfasst:
Erkennen der zweiten Operation für das zweite Bedienelement durch das Endgerät und Bestimmen der Stream-Konfigurationsmenge N durch das Endgerät als Reaktion auf die Operation;
nachdem die Aufnahmeschnittstelle angezeigt wurde, Erkennen einer Operation zum Stoppen der Aufnahme des zweiten Videos; und
Aktualisieren der Stream-Konfigurationsmenge N durch das Endgerät als Reaktion auf den Vorgang zum Stoppen der Aufzeichnung des zweiten Videos.

7. Verfahren nach Anspruch 4, wobei das Endgerät ein erstes Audio-Kodierungsmodul und ein zweites Audio-Kodierungsmodul umfasst und das Kodieren eines Pfads zweiter Audiodaten und eines weiteren Pfads zweiter Audiodaten durch das Endgerät insbesondere Folgendes umfasst:
Kodieren des Pfads zweiter Audiodaten durch das erste Audio-Kodierungsmodul und Kodieren des weiteren Pfads zweiter Audiodaten durch das zweite Audio-Kodierungsmodul.

8. Verfahren nach einem der Ansprüche 1 bis 7, wobei
die ersten Audiodaten das erste Audiosignal sowie einen Zeitstempel, eine Datenlänge, eine Abtastrate und ein Datenformat des ersten Audiosignals umfassen.

9. Verfahren nach einem der Ansprüche 2 bis 7, wobei
die zweiten Audiodaten das erste Audiosignal sowie einen Zeitstempel und eine Datenlänge des ersten Audiosignals umfassen.

10. Elektronische Vorrichtung, umfassend:
einen oder mehrere Prozessoren;
einen oder mehrere Speicher; und
ein Modul, auf dem eine Vielzahl von Anwendungen installiert ist, wobei
der Speicher ein oder mehrere Programme speichert, und wenn das eine oder die mehreren Programme durch den Prozessor ausgeführt werden, die elektronische Vorrichtung dazu befähigt ist, die folgenden Schritte durchzuführen:
Anzeigen einer Aufzeichnungsschnittstelle, wobei die Aufzeichnungsschnittstelle ein erstes Steuerelement (314), ein erstes Vorschaufenster (301) und ein zweites Vorschaufenster (302) umfasst und das erste Vorschaufenster (301) dazu verwendet wird, ein von der Kamera aufgenommenes Bild anzuzeigen;
Anzeigen eines ersten Bildes im ersten Vorschaufenster (301) zu einem ersten Zeitpunkt, wobei das erste Bild von der Kamera zum ersten Zeitpunkt aufgenommen wurde;
wenn erkannt wird, dass sich ein erstes Objekt an einer ersten Position des ersten Bildes befindet, Anzeigen eines zweiten Bildes durch das Endgerät im zweiten Vorschaufenster (302), wobei das zweite Bild durch Ausschneiden eines Teilbildes aus dem ersten Bild erzeugt wird und das zweite Bild das erste Objekt umfasst;
Anzeigen eines dritten Bildes im ersten Vorschaufenster (301) zu einem zweiten Zeitpunkt, wobei das dritte Bild von der Kamera zum zweiten Zeitpunkt aufgenommen wurde;
wenn erkannt wird, dass sich das erste Objekt an einer zweiten Position des dritten Bildes befindet, Anzeigen eines vierten Bildes durch das Endgerät im zweiten Vorschaufenster, wobei das vierte Bild basierend auf dem dritten Bild erzeugt wird und das vierte Bild das erste Objekt umfasst;
Erhalten erster Audiodaten, wobei die ersten Audiodaten ein erstes Audiosignal und Informationen über das erste Audiosignal umfassen, und wobei das erste Audiosignal ein Audiosignal ist, das basierend auf einem zum ersten Zeitpunkt erfassten Audiosignal erzeugt wurde; und
Erkennen einer ersten Bedienung für das erste Steuerelement (314), Stoppen der Videoaufzeichnung als Reaktion auf die erste Bedienung und Speichern eines ersten Videos, das basierend auf einem im ersten Vorschaufenster (301) angezeigten Bild aufgezeichnet wurde, sowie eines zweiten Videos, das basierend auf einem im zweiten Vorschaufenster (302) angezeigten Bild aufgezeichnet wurde, wobei
das erste Video das erste Bild und erste Ziel-Audiodaten umfasst, das zweite Video das zweite Bild und zweite Ziel-Audiodaten umfasst, und sowohl die ersten Ziel-Audiodaten als auch die zweiten Ziel-Audiodaten gleichzeitig codiert werden, indem eine Echtzeitverarbeitung der ersten Audiodaten durchgeführt wird, indem ein Pfad der ersten Audiodaten kopiert wird, um zwei Pfade zweiter Audiodaten zu erhalten, und dann die zwei Pfade zweiter Audiodaten gleichzeitig codiert werden, um einen Audiostream der zweiten Ziel-Audiodaten entsprechend dem zweiten Video und einen Audiostream der ersten Ziel-Audiodaten bezogen auf das erste Video zu erhalten.

11. Ein Computerspeichermedium, umfassend
ein Computerprogramm, das, wenn es von einem Prozessor ausgeführt wird, den Prozessor veranlasst, Operationen durchzuführen, die umfassen:
Anzeigen einer Aufzeichnungsschnittstelle, wobei die Aufzeichnungsschnittstelle ein erstes Steuerelement (314), ein erstes Vorschaufenster (301) und ein zweites Vorschaufenster (302) umfasst, und wobei das erste Vorschaufenster (301) dazu verwendet wird, ein von der Kamera aufgenommenes Bild anzuzeigen;
Anzeigen eines ersten Bildes im ersten Vorschaufenster (301) zu einem ersten Zeitpunkt, wobei das erste Bild von der Kamera zum ersten Zeitpunkt aufgenommen wurde;
wenn erkannt wird, dass sich ein erstes Objekt an einer ersten Position des ersten Bildes befindet, Anzeigen eines zweiten Bildes durch das Endgerät im zweiten Vorschaufenster (302), wobei das zweite Bild durch Ausschneiden eines Teilbildes aus dem ersten Bild erzeugt wird und das zweite Bild das erste Objekt umfasst;
Anzeigen eines dritten Bildes im ersten Vorschaufenster (301) zu einem zweiten Zeitpunkt, wobei das dritte Bild von der Kamera zum zweiten Zeitpunkt aufgenommen wurde;
wenn erkannt wird, dass sich das erste Objekt an einer zweiten Position des dritten Bildes befindet, Anzeigen eines vierten Bildes durch das Endgerät im zweiten Vorschaufenster (302), wobei das vierte Bild basierend auf dem dritten Bild erzeugt wird und das vierte Bild das erste Objekt umfasst;
Erhalten erster Audiodaten, wobei die ersten Audiodaten ein erstes Audiosignal und Informationen über das erste Audiosignal umfassen, und wobei das erste Audiosignal ein Audiosignal ist, das basierend auf einem zum ersten Zeitpunkt erfassten Audiosignal erzeugt wurde; und
Erkennen einer ersten Operation für die erste Steuerung (314), Stoppen der Videoaufnahme als Reaktion auf die erste Operation und Speichern eines ersten Videos, das basierend auf einem im ersten Vorschaufenster (301) angezeigten Bild aufgenommen wurde, sowie eines zweiten Videos, das basierend auf einem im zweiten Vorschaufenster (302) angezeigten Bild aufgenommen wurde, wobei
das erste Video das erste Bild und erste Ziel-Audiodaten umfasst, das zweite Video das zweite Bild und zweite Ziel-Audiodaten umfasst und sowohl die ersten Ziel-Audiodaten als auch die zweiten Ziel-Audiodaten gleichzeitig kodiert werden, indem eine Echtzeitverarbeitung der ersten Audiodaten durchgeführt wird, bei der ein Pfad der ersten Audiodaten kopiert wird, um zwei Pfade zweiter Audiodaten zu erhalten, und dann die zwei Pfade zweiter Audiodaten gleichzeitig kodiert werden, um einen Audiostream der zweiten Ziel-Audiodaten entsprechend dem zweiten Video und einen Audiostream der ersten Ziel-Audiodaten bezogen auf das erste Video zu erhalten.

## Revendications

1. Procédé de traitement vidéo, appliqué à un terminal, dans lequel le terminal comprend une caméra, et le procédé comprend :
l'affichage d'une interface d'enregistrement, dans laquelle l'interface d'enregistrement comprend une première commande (314), une première fenêtre de prévisualisation (301) et une seconde fenêtre de prévisualisation (302), et la première fenêtre de prévisualisation (301) est utilisée pour afficher une image capturée par la caméra ;
l'affichage d'une première image dans la première fenêtre de prévisualisation (301) à un premier instant, dans laquelle la première image est capturée par la caméra au premier instant ;
lorsqu'il est détecté qu'un premier objet se trouve dans une première position de la première image, l'affichage, par le terminal, d'une deuxième image dans la seconde fenêtre de prévisualisation (302), dans laquelle la deuxième image est générée en découpant une image partielle de la première image, et la deuxième image comprend le premier objet ;
l'affichage d'une troisième image dans la première fenêtre de prévisualisation (301) à un second instant, dans laquelle la troisième image est capturée par la caméra au second instant ;
lorsqu'il est détecté que le premier objet se trouve dans une seconde position de la troisième image, l'affichage, par le terminal, d'une quatrième image dans la seconde fenêtre de prévisualisation (302), dans laquelle la quatrième image est générée sur la base de la troisième image, et la quatrième image comprend le premier objet ;
l'obtention de premières données audio, dans lesquelles les premières données audio comprennent un premier signal audio et des informations concernant le premier signal audio, et le premier signal audio est un signal audio généré sur la base d'un signal audio collecté au premier instant ; et
la détection d'une première opération pour la première commande (314), l'arrêt de l'enregistrement vidéo en réponse à la première opération, et l'enregistrement d'une première vidéo enregistrée sur la base d'une image affichée dans la première fenêtre de prévisualisation (301) et d'une seconde vidéo enregistrée sur la base d'une image affichée dans la seconde fenêtre de prévisualisation (302), dans laquelle
la première vidéo comprend la première image et des premières données audio cibles, la seconde vidéo comprend la deuxième image et des secondes données audio cibles, et à la fois les premières données audio cibles et les secondes données audio cibles sont encodées simultanément en effectuant un traitement en temps réel sur les premières données audio en copiant un chemin des premières données audio pour obtenir deux chemins de secondes données audio, puis les deux chemins de secondes données audio sont simultanément encodés pour obtenir un flux audio des secondes données audio cibles correspondant à la seconde vidéo et un flux audio des premières données audio cibles lié à la première vidéo.

2. Procédé selon la revendication 1, dans lequel avant l'affichage d'une interface d'enregistrement, le procédé comprend en outre :
l'affichage de l'interface de prévisualisation, dans laquelle l'interface de prévisualisation comprend une seconde commande ;
détection d'une deuxième opération pour la deuxième commande, de sorte qu'une application de caméra entre dans un premier mode en réponse à la deuxième opération ;
lorsque la première image est affichée dans la première fenêtre de prévisualisation, détection d'une troisième opération pour le premier objet ; et
affichage d'une deuxième fenêtre de prévisualisation en réponse à la troisième opération.

3. Procédé selon la revendication 1 ou 2, dans lequel après l'obtention des premières données audio, avant l'arrêt de l'enregistrement vidéo, le procédé comprend en outre :
la détermination, par le terminal, d'une quantité de configuration de flux N ;
la copie des premières données audio pour obtenir N chemins identiques de deuxièmes données audio basés sur la quantité de configuration de flux N, dans lequel n'importe quel chemin de deuxièmes données audio comprend le premier signal audio et des informations partielles du premier signal audio ; et
l'obtention des premières données audio cibles basées sur un chemin de deuxièmes données audio, et l'obtention des deuxièmes données audio cibles basées sur un autre chemin de deuxièmes données audio.

4. Procédé selon la revendication 3, dans lequel l'obtention des premières données audio cibles basées sur un chemin de deuxièmes données audio, et l'obtention des deuxièmes données audio cibles basées sur un autre chemin de deuxièmes données audio comprend spécifiquement :
le codage, par le terminal, d'un chemin de deuxièmes données audio et d'un autre chemin de deuxièmes données audio pour obtenir deux chemins de données audio codées, dans lequel un chemin de données audio codées est utilisé comme premières données audio cibles, et l'autre chemin de données audio codées est utilisé comme deuxièmes données audio cibles.

5. Procédé selon la revendication 3 ou 4, dans lequel la détermination, par le terminal, d'une quantité de configuration de flux N comprend spécifiquement :
la détection, par le terminal, de la deuxième opération pour la deuxième commande, et la détermination, par le terminal, de la quantité de configuration de flux N en réponse à l'opération ;
après l'affichage de l'interface d'enregistrement, la détection d'une opération pour le premier objet ; et
la mise à jour, par le terminal, de la quantité de configuration de flux N en réponse à l'opération pour le premier objet.

6. Procédé selon la revendication 3 ou 4, dans lequel la détermination, par le terminal, d'une quantité de configuration de flux N comprend spécifiquement :
la détection, par le terminal, de la deuxième opération pour la deuxième commande, et la détermination, par le terminal, de la quantité de configuration de flux N en réponse à l'opération ;
après l'affichage de l'interface d'enregistrement, la détection d'une opération pour arrêter l'enregistrement de la deuxième vidéo ; et
la mise à jour, par le terminal, de la quantité N de configuration de flux en réponse à l'opération d'arrêt de l'enregistrement de la deuxième vidéo.

7. Procédé selon la revendication 4, dans lequel le terminal comprend un premier module de codage audio et un deuxième module de codage audio, et le codage, par le terminal, d'un chemin de deuxièmes données audio et d'un autre chemin de deuxièmes données audio comprend spécifiquement :
le codage, par le premier module de codage audio, du chemin de deuxièmes données audio, et le codage, par le deuxième module de codage audio, de l'autre chemin de deuxièmes données audio.

8. Procédé selon l'une quelconque des revendications 1 à 7, dans lequel
les premières données audio comprennent le premier signal audio ainsi qu'une estampille temporelle, une longueur de données, une fréquence d'échantillonnage et un format de données du premier signal audio.

9. Procédé selon l'une quelconque des revendications 2 à 7, dans lequel
les deuxièmes données audio comprennent le premier signal audio ainsi qu'une estampille temporelle et une longueur de données du premier signal audio.

10. Dispositif électronique, comprenant :
un ou plusieurs processeurs ;
une ou plusieurs mémoires ; et
un module sur lequel une pluralité d'applications sont installées, dans lequel
la mémoire stocke un ou plusieurs programmes, et lorsque le ou les programmes sont exécutés par le processeur, le dispositif électronique est activé pour effectuer les étapes suivantes :
l'affichage d'une interface d'enregistrement, dans laquelle l'interface d'enregistrement comprend un premier contrôle (314), une première fenêtre de prévisualisation (301) et une deuxième fenêtre de prévisualisation (302), et la première fenêtre de prévisualisation (301) est utilisée pour afficher une image capturée par la caméra ;
l'affichage d'une première image dans la première fenêtre de prévisualisation (301) à un premier moment, dans lequel la première image est capturée par la caméra au premier moment ;
lorsqu'il est détecté qu'un premier objet se trouve dans une première position de la première image, l'affichage, par le terminal, d'une deuxième image dans la deuxième fenêtre de prévisualisation (302), dans lequel la deuxième image est générée en découpant une image partielle de la première image, et la deuxième image comprend le premier objet ;
l'affichage d'une troisième image dans la première fenêtre de prévisualisation (301) à un deuxième moment, dans lequel la troisième image est capturée par la caméra au deuxième moment ;
lorsqu'il est détecté que le premier objet se trouve dans une deuxième position de la troisième image, l'affichage, par le terminal, d'une quatrième image dans la deuxième fenêtre de prévisualisation, dans lequel la quatrième image est générée sur la base de la troisième image, et la quatrième image comprend le premier objet ;
obtenir des premières données audio, dans lesquelles les premières données audio comprennent un premier signal audio et des informations sur le premier signal audio, et le premier signal audio est un signal audio généré sur la base d'un signal audio collecté au premier instant ; et
détecter une première opération pour la première commande (314), arrêter l'enregistrement vidéo en réponse à la première opération, et enregistrer une première vidéo enregistrée sur la base d'une image affichée dans la première fenêtre de prévisualisation (301) et une seconde vidéo enregistrée sur la base d'une image affichée dans la seconde fenêtre de prévisualisation (302), dans lesquelles
la première vidéo comprend la première image et des premières données audio cibles, la seconde vidéo comprend la seconde image et des secondes données audio cibles, et les premières données audio cibles et les secondes données audio cibles sont toutes deux encodées simultanément en effectuant un traitement en temps réel sur les premières données audio par copie d'un chemin des premières données audio pour obtenir deux chemins de secondes données audio, puis les deux chemins de secondes données audio sont simultanément encodés pour obtenir un flux audio des secondes données audio cibles correspondant à la seconde vidéo et un flux audio des premières données audio cibles liées à la première vidéo.

11. Support de stockage informatique, comprenant
un programme informatique qui, lorsqu'il est exécuté par un processeur, amène le processeur à effectuer des opérations comprenant :
afficher une interface d'enregistrement, dans laquelle l'interface d'enregistrement comprend une première commande (314), une première fenêtre de prévisualisation (301) et une seconde fenêtre de prévisualisation (302), et la première fenêtre de prévisualisation (301) est utilisée pour afficher une image capturée par la caméra ;
afficher une première image dans la première fenêtre de prévisualisation (301) à un premier instant, dans laquelle la première image est capturée par la caméra au premier instant ;
lorsqu'il est détecté qu'un premier objet se trouve dans une première position de la première image, afficher, par le terminal, une seconde image dans la seconde fenêtre de prévisualisation (302), dans laquelle la seconde image est générée en découpant une image partielle de la première image, et la seconde image comprend le premier objet ;
afficher une troisième image dans la première fenêtre de prévisualisation (301) à un second instant, dans laquelle la troisième image est capturée par la caméra au second instant ;
lorsqu'il est détecté que le premier objet se trouve dans une seconde position de la troisième image, afficher, par le terminal, une quatrième image dans la seconde fenêtre de prévisualisation (302), dans laquelle la quatrième image est générée sur la base de la troisième image, et la quatrième image comprend le premier objet ;
obtenir des premières données audio, dans lesquelles les premières données audio comprennent un premier signal audio et des informations sur le premier signal audio, et le premier signal audio est un signal audio généré sur la base d'un signal audio collecté au premier instant ; et
détection d'une première opération pour la première commande (314), arrêt de l'enregistrement vidéo en réponse à la première opération, et enregistrement d'une première vidéo enregistrée sur la base d'une image affichée dans la première fenêtre de prévisualisation (301) et d'une seconde vidéo enregistrée sur la base d'une image affichée dans la seconde fenêtre de prévisualisation (302), dans lequel
la première vidéo comprend la première image et des premières données audio cibles, la seconde vidéo comprend la seconde image et des secondes données audio cibles, et à la fois les premières données audio cibles et les secondes données audio cibles sont encodées simultanément en effectuant un traitement en temps réel sur les premières données audio en copiant un chemin des premières données audio pour obtenir deux chemins de secondes données audio, puis les deux chemins de secondes données audio sont encodés simultanément pour obtenir un flux audio des secondes données audio cibles correspondant à la seconde vidéo et un flux audio des premières données audio cibles liées à la première vidéo.
